# EUROPEAN PATENT APPLICATION

(11) **EP 4 148 624 A1**
(43) Date of publication of application: **15.03.2023**
(21) Application number: 21809852.3
(22) Date of filing: 15.03.2021
(51) Int. Cl.: G06N 3/04

(54) **NEURAL NETWORK MODEL TRAINING APPARATUS AND METHOD, AND RELATED DEVICE**

(30) Priority: 22.05.2020 CN 202010441573
(71) Applicant: Huawei Technologies Co., Ltd., Shenzhen, Guangdong 518129 (CN)
(72) Inventor: CHEN, Chao, Shenzhen, Guangdong 518129 (CN); XU, Bin, Shenzhen, Guangdong 518129 (CN); HUANG, Weiping, Shenzhen, Guangdong 518129 (CN)
(74) Representative: Gill Jennings & Every LLP
(86) International application number: PCT/CN2021/080784
(87) International publication number: WO 2021/232907

(57) **Abstract**

A training apparatus and method for a neural network model, and a related device are provided. The training apparatus may be used in a scenario in which model training is performed on a neural network in the field of artificial intelligence AI. The training apparatus includes a plurality of accelerators. In a parallel processing process in which the training apparatus trains a neural network model by using the plurality of accelerators, a complete weight coefficient of the neural network model is stored in the plurality of accelerators in the training apparatus in a distributed manner, and weight coefficients of the plurality of accelerators are subsequently aggregated, to obtain the complete weight coefficient. The neural network model is further trained on each accelerator based on different input data and the complete weight coefficient. In other words, the complete weight coefficient is stored in the plurality of accelerators in the training apparatus in a distributed manner, to reduce video RAM consumption of the training apparatus in a training process of the neural network model.

## Description

This application claims priority to Chinese Patent Application No. 202010441573.3, filed with the China National Intellectual Property Administration on May 22, 2020 and entitled "TRAINING APPARATUS AND METHOD FOR NEURAL NETWORK MODEL, AND RELATED DEVICE", which is incorporated herein by reference in its entirety.

### TECHNICAL FIELD

This application relates to the field of artificial intelligence, and in particular, to a training apparatus and method for a neural network model, and a related device.

### BACKGROUND

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result by using the knowledge. In other words, artificial intelligence is a branch of computer science, and is intended to understand the essence of intelligence and produce a new intelligent machine that can react in a manner similar to human intelligence. The artificial intelligence is to study design principles and implementation methods of various intelligent machines, so that the machines have perceiving, inference, and decision-making functions. Researches in an artificial intelligence field include a robot, natural language processing, computer vision, decision-making and inference, human-computer interaction, recommendation and search, an AI basic theory, and the like.

In recent years, a large network and a large data amount are required in training of a neural network model. Usually, data parallelism can meet a requirement of a surge in computing requirements in a training network. A basic idea of data parallelism is to use model copies of a plurality of devices to simultaneously train a data subset, and synchronize model parameters across the copies when iteration ends.

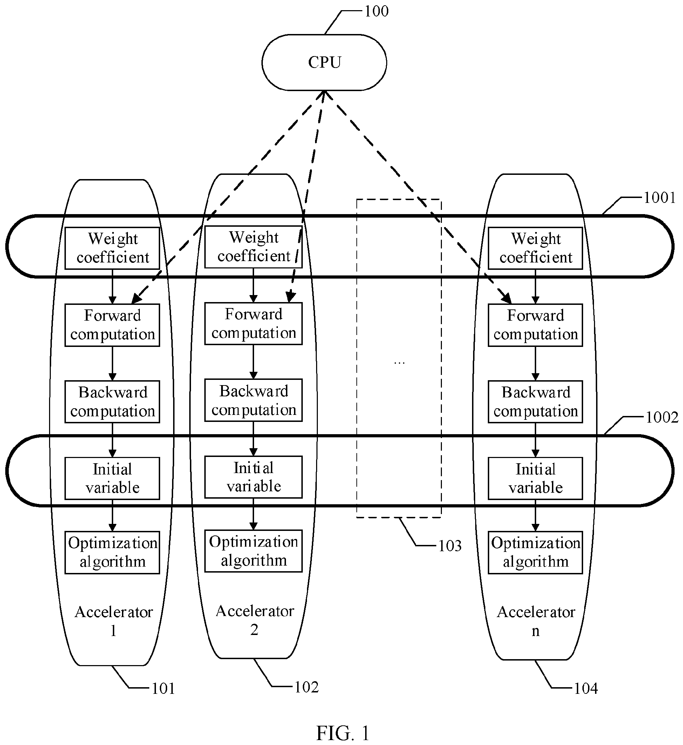

Specifically, FIG. 1 is a schematic diagram of training a neural network in a data parallel manner. The training process is implemented by a CPU and a plurality of accelerators (an accelerator 1, an accelerator 2, ..., and an accelerator n). The plurality of accelerators are trained together. Usually, the training process includes the following steps: (1) Create a same training model on each accelerator. For example, when a BERT network is trained, a complete BERT model is required on each accelerator. (2) Initialize a weight coefficient of the accelerator 1, and send the weight coefficient to each accelerator through broadcast (broadcast) in collective communication (1001). Usually, when a neural network is trained, an initial value may be randomly assigned to a weight. A weight is first randomly initialized on any accelerator, and then the weight is sent to each accelerator, to keep initial weights of the accelerators consistent. (3) The CPU sends different data to different accelerators. (4) Each accelerator performs forward-backward computation, to obtain corresponding gradient information. Step (4) is performed inside each accelerator. After forward-backward computation, gradient information corresponding to a batch (batch) of data of the accelerator is obtained. Because input data is different in step (3), gradients obtained by accelerators are different. (5) Perform an allreduce (allreduce) operation, to obtain an average gradient. Different gradients obtained by the accelerators in step (4) are averaged. After step (5), gradients of all accelerators are consistent, and are values obtained after the gradients of all accelerators are averaged. (6) Use the average gradient to update the initial weight. The initial weights of the accelerators are consistent after step (2), and are updated by using the average gradient obtained after the allreduce operation. Therefore, it can be ensured that weights of the accelerators may also be consistent after each update. In an update process in step (6), each accelerator may further use the average gradient and the weight obtained in step (1) as an input of an optimizer. The optimizer performs optimization by using an initial variable of the optimizer (1002), and outputs a processed gradient. Each accelerator further updates the weight by using the processed gradient.

The accelerator may be a graphics processing unit (graphics processing unit, GPU), a neural processing unit (neural processing unit, NPU), or a tensor processing unit (tensor processing unit, TPU). Gradient aggregation may be implemented by using a plurality of methods, for example, collective communication.

In the data parallel processing manner, training parameters such as the initial weight in step (2) and the initial variable in step (6) need to consume storage space, in the accelerator, used during training, for example, a video RAM used in GPU training, and memory used in CPU training. When a large neural network model is trained, training cannot be performed due to insufficient storage space in a single accelerator.

### SUMMARY

Embodiments of this application provide a training apparatus and method for a neural network model, and a related device, to reduce video RAM consumption of the training apparatus in a training process of a neural network model.

According to a first aspect, an embodiment of this application provides a training apparatus for a neural network model. The training apparatus includes a plurality of accelerators. When the training apparatus trains a neural network model, each accelerator in the training apparatus is configured to store some weight coefficients, and the some weight coefficients stored in each of the plurality of accelerators form a complete weight coefficient. In other words, the complete weight coefficient of the neural network model is stored in the plurality of accelerators in the training apparatus in a distributed manner. Then, each accelerator aggregates the some weight coefficients stored in each of the plurality of accelerators, to obtain the complete weight coefficient. Then, each accelerator trains the neural network model based on input data and the complete weight coefficient, where input data of the plurality of accelerators is different. In a parallel processing process in which the training apparatus trains the neural network model by using the plurality of accelerators, the complete weight coefficient of the neural network model is stored in the plurality of accelerators in the training apparatus in a distributed manner, and weight coefficients of the plurality of accelerators are subsequently aggregated, to obtain the complete weight coefficient. The neural network model is further trained on each accelerator based on different input data and the complete weight coefficient. In other words, the complete weight coefficient is stored in the plurality of accelerators in the training apparatus in a distributed manner, to reduce video RAM consumption of the training apparatus in a training process of the neural network model.

In a possible implementation of the first aspect in this embodiment of this application, when training the neural network model based on the input data and the complete weight coefficient, each accelerator is specifically configured to: calculate gradient information based on the input data and the complete weight coefficient; calculate a target gradient based on the gradient information of the plurality of accelerators; and further update the some weight coefficients based on the target gradient, and train the neural network model based on updated some weight coefficients. After calculating the gradient information based on different input data and the complete weight coefficient, each accelerator in the training apparatus calculates, based on the gradient information of the plurality of accelerators, the target gradient used to update the some weight coefficients. Further, each accelerator updates, based on the target gradient, the some weight coefficients stored in each accelerator, and trains the neural network model based on the updated some weight coefficients. This implementation provides a specific implementation process of training the neural network model based on different input data. This can improve feasibility of the solution, and further improve flexibility of the solution.

In a possible implementation of the first aspect in this embodiment of this application, each accelerator in the training apparatus is further configured to store some initial variables of an optimizer. Some initial variables stored in each of the plurality of accelerators form a complete initial variable of the optimizer, and the optimizer is configured to update the weight coefficient of the neural network model. When updating the some weight coefficients based on the target gradient, each accelerator in the training apparatus is specifically configured to: process the target gradient and the some weight coefficients based on the some initial variables, to obtain a processed target gradient; and then update the some weight coefficients based on the processed target gradient. When the optimizer optimizes the weight coefficient of the neural network model, each accelerator may store the initial variable of the accelerator in a distributed manner, that is, each accelerator stores the some initial variables. Then, each accelerator uses the target gradient and the some weight coefficients as an input of the optimizer; performs optimization by using an optimization algorithm preset in the optimizer, to obtain the processed target gradient; and then updates, based on the processed target gradient, the some weight coefficients stored in each accelerator. In other words, the plurality of accelerators in the training apparatus store the complete initial variable of the optimizer in a distributed manner, to further reduce video RAM consumption of the training apparatus in a training process of the neural network model.

In a possible implementation of the first aspect in this embodiment of this application, the optimizer includes a vector operation, and when processing the target gradient and the some weight coefficients based on the some initial variables, to obtain the processed target gradient, each accelerator in the training apparatus is specifically configured to: calculate a scalar representation of the target gradient; aggregate the scalar representation of the target gradient in each of the plurality of accelerators, to obtain a summation result of the target gradient; then calculate a vector representation of the target gradient based on the summation result; and further process the vector representation of the target gradient and the some weight coefficients based on the some initial variables, to obtain the processed target gradient. When the optimizer includes the vector operation (for example, a matrix operation or another vector operation), a complete gradient is required during calculation, and the target gradient is distributed in each accelerator. Therefore, when obtaining the processed target gradient, each accelerator first calculates the scalar representation of the target gradient; then aggregates the scalar representation of the target gradient in each of the plurality of accelerators, to obtain the summation result of the target gradient; calculates the vector representation of the target gradient based on the summation result; and further processes the vector representation of the target gradient and the some weight coefficients based on the some initial variables, to obtain the processed target gradient. In this implementation, the solution may be applied to an implementation process of an optimizer including a vector operation. This can improve feasibility of the solution.

In a possible implementation of the first aspect in this embodiment of this application, when aggregating the scalar representation of the target gradient in each of the plurality of accelerators, to obtain the summation result of the target gradient, each accelerator in the training apparatus is specifically configured to aggregate the scalar representation of the target gradient in each of the plurality of accelerators by using an allreduce (allreduce) operation in collective communication, to obtain the summation result of the target gradient. Each accelerator in the training apparatus may obtain the summation result of the target gradient in the plurality of accelerators by using the allreduce (allreduce) operation in collective communication. This implementation provides a specific implementation process of obtaining the summation result of the target gradient. This can improve feasibility of the solution, and further improve flexibility of the solution.

In a possible implementation of the first aspect in this embodiment of this application, the some weight coefficients include weight coefficients assigned to the plurality of accelerators one by one after the complete weight coefficient is evenly divided. In a training process of the neural network model, processing capabilities of the plurality of accelerators in the training apparatus are usually the same or similar. Therefore, the complete weight coefficient may be evenly divided based on a quantity of the plurality of accelerators, and then assigned to the plurality of accelerators one by one, so that each accelerator stores, in a distributed manner, the some weight coefficients obtained through even division. This implementation provides a specific implementation process in which the plurality of accelerators store the complete weight coefficient in a distributed manner. This can improve feasibility of the solution, and further improve flexibility of the solution.

In a possible implementation of the first aspect in this embodiment of this application, when aggregating the some weight coefficients stored in each of the plurality of accelerators, to obtain the complete weight coefficient, each accelerator in the training apparatus is specifically configured to aggregate, by using an allgather (allgather) operation in collective communication, the some weight coefficients stored in each of the plurality of accelerators, to obtain the complete weight coefficient. Each accelerator in the training apparatus may obtain the complete weight coefficient in the plurality of accelerators by using the allgather operation in collective communication. This implementation provides a specific implementation process of obtaining the complete weight coefficient. This can improve feasibility of the solution, and further improve flexibility of the solution.

In a possible implementation of the first aspect in this embodiment of this application, when calculating the target gradient based on the gradient information of the plurality of accelerators, each accelerator in the training apparatus is specifically configured to calculate, by using a reduce-scatter (reduce-scatter) operation in collective communication, the target gradient based on the gradient information of the plurality of accelerators. Each accelerator in the training apparatus may obtain the target gradient in the plurality of accelerators by using the reduce-scatter operation in collective communication. This implementation provides a specific implementation process of calculating the target gradient. This can improve feasibility of the solution, and further improve flexibility of the solution.

In a possible implementation of the first aspect in this embodiment of this application, the some initial variables include initial variables assigned to the plurality of accelerators one by one after the complete initial variable is evenly divided. In a training process of the neural network model, processing capabilities of the plurality of accelerators in the training apparatus are usually the same or similar. Therefore, the complete initial variable may be evenly divided based on a quantity of the plurality of accelerators, and then assigned to the plurality of accelerators one by one, so that each accelerator stores, in a distributed manner, the some initial variables obtained through even division. This implementation provides a specific implementation process in which the plurality of accelerators store the complete initial variable in a distributed manner. This can improve feasibility of the solution, and further improve flexibility of the solution.

In a possible implementation of the first aspect in this embodiment of this application, each accelerator in the training apparatus is further configured to: obtain an updating parameter of the some weight coefficients, and update the some weight coefficients based on the updating parameter of the some weight coefficients; obtain an updating parameter of the initial variable, and update the initial variable based on the updating parameter of the variable; obtain an updating parameter of the target gradient, and update the target gradient based on the updating parameter of the target gradient; and/or obtain an updating parameter of the processed target gradient, and update the target gradient based on the updating parameter of the processed target gradient. Target parameters related to the training process of the neural network model may be stored in a distributed manner, and the target parameters include the some weight coefficients, the initial variable, the target gradient, and/or the processed target gradient, and the like. When some weight coefficients corresponding to the neural network model or the initial variable of the optimizer needs to be updated, each accelerator in the training apparatus may update the target parameters stored in a distributed manner. This can further reduce video RAM consumption of the accelerator in the training apparatus.

According to a second aspect, an embodiment of this application provides a training apparatus for a neural network model. The training apparatus includes a plurality of accelerators. When the training apparatus trains a neural network model, each accelerator in the training apparatus is configured to: calculate gradient information based on input data and a complete weight coefficient, where input data of the plurality of accelerators is different; then calculate a target gradient based on the gradient information of the plurality of accelerators; and store some initial variables of an optimizer, where some initial variables stored in each of the plurality of accelerators form a complete initial variable of the optimizer, and the optimizer is configured to update the weight coefficient of the neural network model; process the target gradient and some weight coefficients based on the some initial variables, to obtain a processed target gradient, where the some weight coefficients processed by each of the plurality of accelerators form the complete weight coefficient; and update the complete weight coefficient based on the processed target gradient, and train the neural network model based on an updated complete weight coefficient. In a parallel processing process in which the training apparatus trains the neural network model by using the plurality of accelerators, the complete initial variable of the optimizer in the neural network model is stored in the plurality of accelerators in the training apparatus in a distributed manner. Each accelerator processes the target gradient and the some weight coefficients based on the some initial variables, to obtain the processed target gradient; then updates the complete weight coefficient based on the processed target gradient; and trains the neural network model based on the updated complete weight coefficient. In other words, the complete initial weight of the optimizer is stored in the plurality of accelerators in the training apparatus in a distributed manner, to reduce video RAM consumption of the training apparatus in a training process of the neural network model.

In a possible implementation of the second aspect in this embodiment of this application, the optimizer includes a vector operation, and when processing the target gradient and the some weight coefficients based on the some initial variables, to obtain the processed target gradient, each accelerator in the training apparatus is specifically configured to: calculate a scalar representation of the target gradient; aggregate the scalar representation of the target gradient in each of the plurality of accelerators, to obtain a summation result of the target gradient; then calculate a vector representation of the target gradient based on the summation result; and further process the vector representation of the target gradient and the some weight coefficients based on the some initial variables, to obtain the processed target gradient. When the optimizer includes the vector operation (for example, a matrix operation or another vector operation), a complete gradient is required during calculation, and the target gradient is distributed in each accelerator. Therefore, when obtaining the processed target gradient, each accelerator first calculates the scalar representation of the target gradient; then aggregates the scalar representation of the target gradient in each of the plurality of accelerators, to obtain the summation result of the target gradient; calculates the vector representation of the target gradient based on the summation result; and further processes the vector representation of the target gradient and the some weight coefficients based on the some initial variables, to obtain the processed target gradient. In this implementation, the solution may be applied to an implementation process of an optimizer including a vector operation. This can improve feasibility of the solution.

In a possible implementation of the second aspect in this embodiment of this application, when aggregating the scalar representation of the target gradient in each of the plurality of accelerators, to obtain the summation result of the target gradient, each accelerator in the training apparatus is specifically configured to aggregate the scalar representation of the target gradient in each of the plurality of accelerators by using an allreduce operation in collective communication, to obtain the summation result of the target gradient. Each accelerator in the training apparatus may obtain the summation result of the target gradient in the plurality of accelerators by using the allreduce (allreduce) operation in collective communication. This implementation provides a specific implementation process of obtaining the summation result of the target gradient. This can improve feasibility of the solution, and further improve flexibility of the solution.

In a possible implementation of the second aspect in this embodiment of this application, when calculating the target gradient based on the gradient information of the plurality of accelerators, each accelerator is specifically configured to calculate, by using a reduce-scatter (reduce-scatter) operation in collective communication, the target gradient based on the gradient information of the plurality of accelerators. Each accelerator in the training apparatus may obtain the target gradient in the plurality of accelerators by using the reduce-scatter operation in collective communication. This implementation provides a specific implementation process of calculating the target gradient. This can improve feasibility of the solution, and further improve flexibility of the solution.

In a possible implementation of the second aspect in this embodiment of this application, the some initial variables include initial variables assigned to the plurality of accelerators one by one after the complete initial variable is evenly divided. In the training process of the neural network model, processing capabilities of the plurality of accelerators in the training apparatus are usually the same or similar. Therefore, the complete initial variable may be evenly divided based on a quantity of the plurality of accelerators, and then assigned to the plurality of accelerators one by one, so that each accelerator stores, in a distributed manner, the some initial variables obtained through even division. This implementation provides a specific implementation process in which the plurality of accelerators store the complete initial variable in a distributed manner. This can improve feasibility of the solution, and further improve flexibility of the solution.

In a possible implementation of the second aspect in this embodiment of this application, each accelerator in the training apparatus is further configured to: obtain an updating parameter of the complete weight coefficient, and update the complete weight coefficient based on the updating parameter of the complete weight coefficient; obtain an updating parameter of the initial variable, and update the initial variable based on the updating parameter of the initial variable; obtain an updating parameter of the target gradient, and update the target gradient based on the updating parameter of the target gradient; and/or obtain an updating parameter of the processed target gradient, and update the target gradient based on the updating parameter of the processed target gradient. Target parameters related to the training process of the neural network model may be stored in a distributed manner, and the target parameters include the complete weight coefficient, the initial variable, the target gradient, and/or the processed target gradient, and the like. When some weight coefficients corresponding to the neural network model or the initial variable of the optimizer needs to be updated, each accelerator in the training apparatus may update the target parameters stored in a distributed manner. This can further reduce video RAM consumption of the accelerator in the training apparatus.

According to a third aspect, an embodiment of this application provides a training method for a neural network model. The training method is applied to a plurality of accelerators. The plurality of accelerators are included in a training apparatus. The method includes: storing some weight coefficients, where the some weight coefficients stored in each of the plurality of accelerators form a complete weight coefficient; aggregating the some weight coefficients stored in each of the plurality of accelerators, to obtain the complete weight coefficient; and training a neural network model based on input data and the complete weight coefficient, where input data of the plurality of accelerators is different.

In a possible implementation of the third aspect in this embodiment of this application, the training a neural network model based on input data and the complete weight coefficient includes: calculating gradient information based on the input data and the complete weight coefficient; calculating a target gradient based on the gradient information of the plurality of accelerators; and updating the some weight coefficients based on the target gradient, and training the neural network model based on updated some weight coefficients.

In a possible implementation of the third aspect in this embodiment of this application, the method further includes: storing some initial variables of an optimizer, where some initial variables stored in each of the plurality of accelerators form a complete initial variable of the optimizer, and the optimizer is configured to update the weight coefficient of the neural network model; and the updating the some weight coefficients based on the target gradient includes: processing the target gradient and the some weight coefficients based on the some initial variables, to obtain a processed target gradient; and updating the some weight coefficients based on the processed target gradient.

In a possible implementation of the third aspect in this embodiment of this application, the optimizer includes a vector operation, and the processing the target gradient and the some weight coefficients based on the some initial variables, to obtain a processed target gradient includes: calculating a scalar representation of the target gradient; aggregating the scalar representation of the target gradient in each of the plurality of accelerators, to obtain a summation result of the target gradient; calculating a vector representation of the target gradient based on the summation result; and processing the vector representation of the target gradient and the some weight coefficients based on the some initial variables, to obtain the processed target gradient.

In a possible implementation of the third aspect in this embodiment of this application, the aggregating a scalar representation of the target gradient in each of the plurality of accelerators, to obtain a summation result of the target gradient includes: aggregating the scalar representation of the target gradient in each of the plurality of accelerators by using an allreduce operation in collective communication, to obtain the summation result of the target gradient.

In a possible implementation of the third aspect in this embodiment of this application, the some weight coefficients include weight coefficients assigned to the plurality of accelerators one by one after the complete weight coefficient is evenly divided.

In a possible implementation of the third aspect in this embodiment of this application, the aggregating the some weight coefficients stored in each of the plurality of accelerators, to obtain the complete weight coefficient includes: aggregating, by using an allgather operation in collective communication, the some weight coefficients stored in each of the plurality of accelerators, to obtain the complete weight coefficient.

In a possible implementation of the third aspect in this embodiment of this application, the calculating a target gradient based on the gradient information of the plurality of accelerators includes: calculating, by using a reduce-scatter operation in collective communication, the target gradient based on the gradient information of the plurality of accelerators.

In a possible implementation of the third aspect in this embodiment of this application, the some initial variables include initial variables assigned to the plurality of accelerators one by one after the complete initial variable is evenly divided.

In a possible implementation of the third aspect in this embodiment of this application, the method further includes: obtaining an updating parameter of the some weight coefficients, and updating the some weight coefficients based on the updating parameter of the some weight coefficients; obtaining an updating parameter of the initial variable, and updating the initial variable based on the updating parameter of the initial variable; obtaining an updating parameter of the target gradient, and updating the target gradient based on the updating parameter of the target gradient; and/or obtaining an updating parameter of the processed target gradient, and updating the target gradient based on the updating parameter of the processed target gradient.

For specific implementation steps of the third aspect and the possible implementations of the third aspect of this application and beneficial effects brought by each possible implementation, refer to descriptions in the possible implementations of the first aspect. Details are not described herein again.

According to a fourth aspect, an embodiment of this application provides a training method for a neural network model. The training method is applied to a plurality of accelerators. The plurality of accelerators are included in a training apparatus. The method includes: calculating gradient information based on input data and a complete weight coefficient, where input data of the plurality of accelerators is different; calculating a target gradient based on the gradient information of the plurality of accelerators; storing some initial variables of an optimizer, where some initial variables stored in each of the plurality of accelerators form a complete initial variable of the optimizer, and the optimizer is configured to update the weight coefficient of a neural network model; processing the target gradient and some weight coefficients based on the some initial variables, to obtain a processed target gradient, where the some weight coefficients processed by each of the plurality of accelerators form the complete weight coefficient; and updating the complete weight coefficient based on the processed target gradient, and training the neural network model based on an updated complete weight coefficient.

In a possible implementation of the fourth aspect in this embodiment of this application, the optimizer includes a vector operation, and the processing the target gradient and the some weight coefficients based on the some initial variables, to obtain a processed target gradient includes: calculating a scalar representation of the target gradient; aggregating the scalar representation of the target gradient in each of the plurality of accelerators, to obtain a summation result of the target gradient; calculating a vector representation of the target gradient based on the summation result; and processing the vector representation of the target gradient and the some weight coefficients based on the some initial variables, to obtain the processed target gradient.

In a possible implementation of the fourth aspect in this embodiment of this application, the aggregating a scalar representation of the target gradient in each of the plurality of accelerators, to obtain a summation result of the target gradient includes: aggregating the scalar representation of the target gradient in each of the plurality of accelerators by using an allreduce operation in collective communication, to obtain the summation result of the target gradient.

In a possible implementation of the fourth aspect in this embodiment of this application, the calculating a target gradient based on the gradient information of the plurality of accelerators includes: calculating, by using a reduce-scatter operation in collective communication, the target gradient based on the gradient information of the plurality of accelerators.

In a possible implementation of the fourth aspect in this embodiment of this application, the some initial variables include initial variables assigned to the plurality of accelerators one by one after the complete initial variable is evenly divided.

In a possible implementation of the fourth aspect in this embodiment of this application, the method further includes: obtaining an updating parameter of the complete weight coefficient, and updating the complete weight coefficient based on the updating parameter of the complete weight coefficient; obtaining an updating parameter of the initial variable, and updating the initial variable based on the updating parameter of the initial variable; obtaining an updating parameter of the target gradient, and updating the target gradient based on the updating parameter of the target gradient; and/or obtaining an updating parameter of the processed target gradient, and updating the target gradient based on the updating parameter of the processed target gradient.

For specific implementation steps of the fourth aspect and the possible implementations of the fourth aspect of this application and beneficial effects brought by each possible implementation, refer to descriptions in the possible implementations of the second aspect. Details are not described herein again.

According to a fifth aspect, an embodiment of this application provides a training apparatus for a neural network model. The training apparatus includes a plurality of accelerators. Each accelerator includes: a storage unit, configured to store some weight coefficients, where the some weight coefficients stored in each of the plurality of accelerators form a complete weight coefficient; an addition unit, configured to aggregate the some weight coefficients stored in each of the plurality of accelerators, to obtain the complete weight coefficient; and a training unit, configured to train a neural network model based on input data and the complete weight coefficient, where input data of the plurality of accelerators is different.

In the fifth aspect of this application, modules included in the training apparatus in a neural network may further be configured to perform steps performed by the training apparatus in the possible implementations of the first aspect. For details, refer to the first aspect. Details are not described herein again.

According to a sixth aspect, an embodiment of this application provides a training apparatus for a neural network model. The training apparatus includes a plurality of accelerators. Each accelerator includes: a calculation unit, configured to calculate gradient information based on input data and a complete weight coefficient, where input data of the plurality of accelerators is different, and the calculation unit is further configured to calculate a target gradient based on the gradient information of the plurality of accelerators; a storage unit, configured to store some initial variables of an optimizer, where some initial variables stored in each of the plurality of accelerators form a complete initial variable of the optimizer, and the optimizer is configured to update the weight coefficient of a neural network model; a processing unit, configured to process the target gradient and some weight coefficients based on the some initial variables, to obtain a processed target gradient, where the some weight coefficients processed by each of the plurality of accelerators form the complete weight coefficient; and an updating unit, configured to update the complete weight coefficient based on the processed target gradient, and train the neural network model based on an updated complete weight coefficient.

In the sixth aspect of this application, modules included in the obtaining apparatus in a neural network may further be configured to perform steps performed by the training apparatus in the possible implementations of the second aspect. For details, refer to the second aspect. Details are not described herein again.

According to a seventh aspect, an embodiment of this application provides a computer-readable storage medium. The computer storage medium stores a computer program, the computer program includes program instructions, and when executing the program instructions, a processor performs the method in any one of the third aspect or the possible implementations of the third aspect or the method in any one of the fourth aspect or the possible implementations of the fourth aspect.

According to an eighth aspect, an embodiment of this application provides a chip system. The chip system includes a processor, configured to support an access network device in implementing a function in any one of the third aspect or the possible implementations of the third aspect, or any one of the fourth aspect or the possible implementations of the fourth aspect. In a possible design, the chip system may further include a memory. The memory is configured to store program instructions and data that are necessary for the access network device. The chip system may include a chip, or may include a chip and another discrete device.

According to a ninth aspect, an embodiment of this application provides a computer-readable storage medium storing one or more computer-executable instructions. When executing the computer-executable instructions, a processor performs the method in any one of the third aspect or the possible implementations of the third aspect or the method in any one of the fourth aspect or the possible implementations of the fourth aspect.

For technical effects brought by any possible implementation of the third aspect to the ninth aspect, refer to technical effects brought by the first aspect or different possible implementations of the first aspect or technical effects brought by the second aspect or different possible implementations of the second aspect. Details are not described herein again.

It can be learned from the technical solutions that embodiments of this application have the following advantages: In a parallel processing process in which the training apparatus trains the neural network model by using the plurality of accelerators, the complete weight coefficient of the neural network model is stored in the plurality of accelerators in the training apparatus in a distributed manner, and weight coefficients of the plurality of accelerators are subsequently aggregated, to obtain the complete weight coefficient. The neural network model is further trained on each accelerator based on different input data and the complete weight coefficient. In other words, the complete weight coefficient is stored in the plurality of accelerators in the training apparatus in a distributed manner, to reduce video RAM consumption of the training apparatus in a training process of the neural network model.

### DESCRIPTION OF DRAWINGS

To describe technical solutions in embodiments of this application or in the conventional technology more clearly, the following briefly describes the accompanying drawings for describing embodiments or the conventional technology. It is clear that the accompanying drawings in the following descriptions show some embodiments of this application, and a person of ordinary skill in the art may still derive other drawings from these accompanying drawings without creative efforts.
FIG. 1 is a schematic diagram of a training process of a neural network model according to an embodiment of this application;
FIG. 2 is another schematic diagram of a training process of a neural network model according to an embodiment of this application;
FIG. 3 is another schematic diagram of a training process of a neural network model according to an embodiment of this application;
FIG. 4 is a schematic diagram of implementing collective communication in a training process of a neural network model according to an embodiment of this application;
FIG. 5 is another schematic diagram of implementing collective communication in a training process of a neural network model according to an embodiment of this application;
FIG. 6 is another schematic diagram of implementing collective communication in a training process of a neural network model according to an embodiment of this application;
FIG. 7 is another schematic diagram of implementing collective communication in a training process of a neural network model according to an embodiment of this application;
FIG. 8 is a schematic diagram of a system architecture in a training process of a neural network model according to an embodiment of this application;
FIG. 9 is another schematic diagram of a system architecture in a training process of a neural network model according to an embodiment of this application;
FIG. 10 is another schematic diagram of a training process of a neural network model according to an embodiment of this application;
FIG. 11 is a schematic diagram in which a training apparatus implements a training method for a neural network model according to an embodiment of this application;
FIG. 12 is another schematic diagram in which a training apparatus implements a training method for a neural network model according to an embodiment of this application;
FIG. 13 is another schematic diagram in which a training apparatus implements a training method for a neural network model according to an embodiment of this application;
FIG. 14 is another schematic diagram in which a training apparatus implements a training method for a neural network model according to an embodiment of this application;
FIG. 15 is a schematic diagram of a training apparatus according to an embodiment of this application;
FIG. 16 is another schematic diagram of a training apparatus according to an embodiment of this application; and
FIG. 17 is another schematic diagram of a training apparatus according to an embodiment of this application.

### DESCRIPTION OF EMBODIMENTS

The following describes embodiments of this application with reference to the accompanying drawings in embodiments of this application. In the specification, claims, and the accompanying drawings of this application, terms such as "first", "second", "third", and "fourth" are intended to distinguish between different objects but do not describe a particular order. In addition, terms "include", "have", or any other variant thereof are intended to cover a non-exclusive inclusion. For example, a process, a method, a system, a product, or a device including a series of steps or units is not limited to the listed steps or units, but may include steps or units which are not listed, or that are inherent to such processes, methods, products, or devices. An "embodiment" mentioned in this specification means that a particular characteristic, structure, or feature described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that the embodiments described in the specification may be combined with another embodiment.

First, some terms in this application are described, to facilitate understanding of a person skilled in the art.

### (1) Neural network training

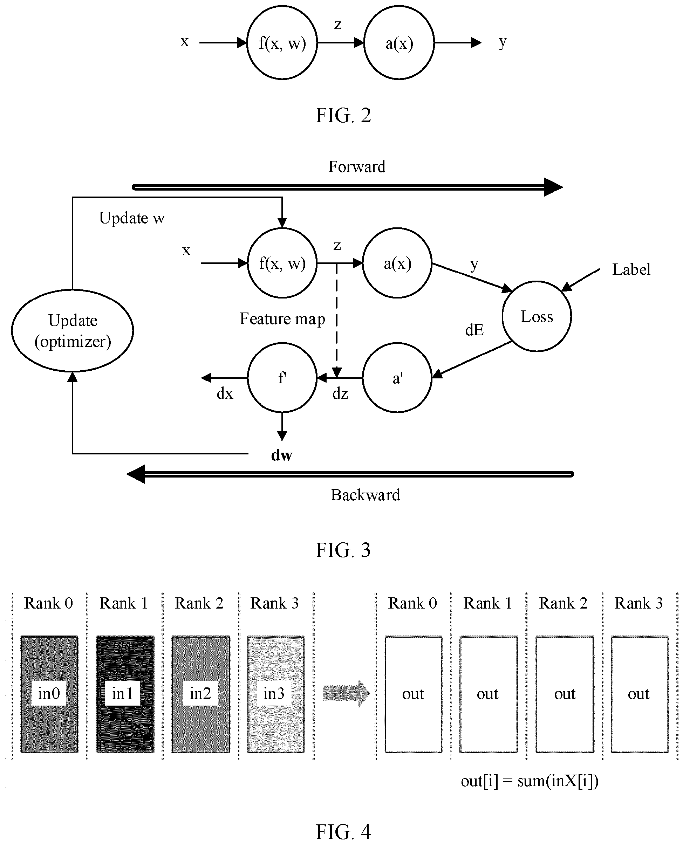

A basic structure of a neural network is shown in FIG. 2. An output y is obtained after transformation is performed on an input x at a plurality of layers. Usually, the plurality of layers at which transformation is performed include two types: a linear layer (f(x, w) in the figure), where the linear layer is usually a convolutional layer, a fully connected layer, or the like, and has a learnable weight coefficient; and a non-linear layer (a(x) in the figure), where the non-linear layer is also referred to as an activation layer, and is usually a ReLU layer, a sigmoid layer, or the like. The linear layer and the non-linear layer are stacked alternately, and transformation is performed at each layer, to finally obtain the output.

Mathematically, the neural network may be considered as a function transformation layer by layer. For example, a function such as y = a(f(x, w)) is described in FIG. 2. In supervised training, the output y needs to fit a manually annotated label (label). The neural network can fit different relationships between y and x by adjusting a weight coefficient w. A process of continuously adjusting the weight coefficient w to fit x to the label is referred to as neural network training.

FIG. 3 is a schematic diagram of neural network training. Usually, a backpropagation method is used for calculation in neural network training. Reverse calculation is performed by using a difference between a forward-predicted value y and a calibrated standard value label, to obtain a gradient dw of the weight coefficient. Then, the weight coefficient is adjusted by using the gradient, so that an error between y and the label is smaller. A process of a forward operation, a backward operation, and weight adjustment is referred to as an iteration. The neural network continuously adjusts a parameter by repeating tens of thousands to millions of iterations, to finally obtain a better solution.

After the gradient dw is obtained, there are a plurality of adjustment policies, namely, optimizers (optimizer), for example, stochastic gradient descent. In other words, dw is simply multiplied by a learning rate, to adjust the weight. Currently, an Adam optimizer and a LAR optimizer are widely used.

### 2. Collective communication

Collective communication provides application programming interfaces (Application Programming Interface, API) of a plurality of operations for a user, to complete operations such as averaging in a plurality of accelerators. Correspondingly, in data parallelism of neural network training, gradient averaging in each accelerator may be completed through collective communication. Several basic collective communication operations are shown in FIG. 4 to FIG. 7. An example in which a plurality of accelerators include a rank 0, a rank 1, a rank 2, and a rank 3 is used.

Allreduce (Allreduce): Data of each accelerator is summed up. After the allreduce operation ends, each accelerator obtains a same summation result. An allreduce process is shown in FIG. 4.

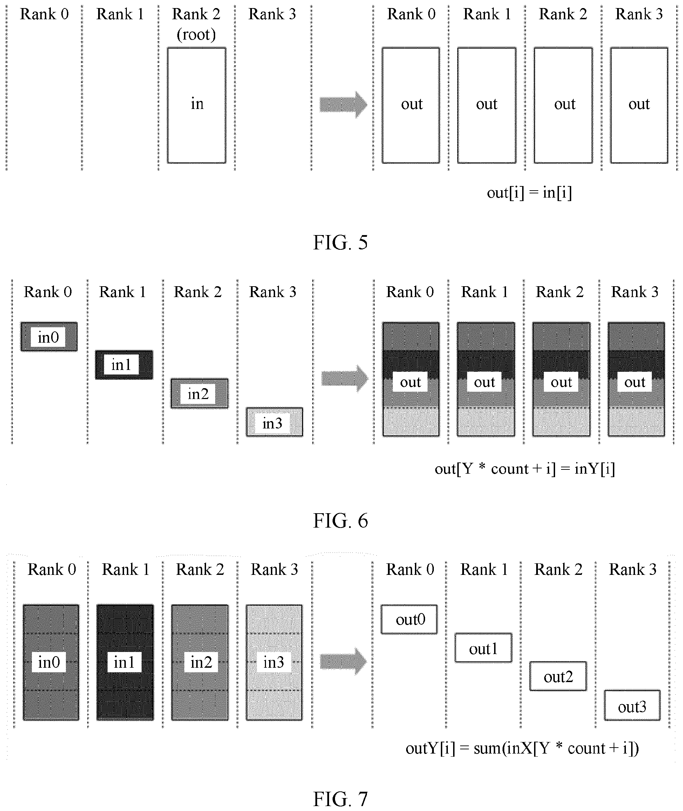

Broadcast (Broadcast): Data of an accelerator is copied to all accelerators. A broadcast process is shown in FIG. 5.

Allgather (Allgather): Content of each accelerator is gathered, and each accelerator may obtain an aggregated large tensor (tensor). An allgather process is shown in FIG. 6.

Reduce-scatter (Reduce-scatter): After tensors of the accelerators are scattered, each accelerator obtains a corresponding different part. A reduce-scatter process is shown in FIG. 7.

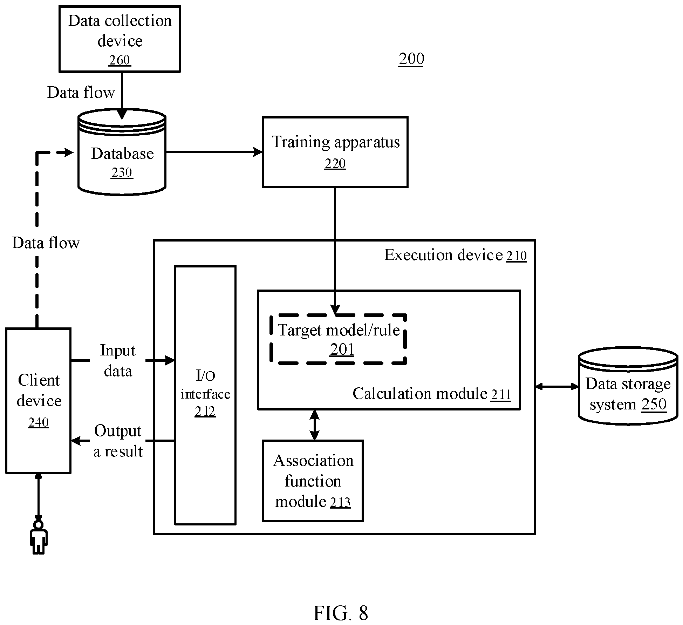

Refer to FIG. 8. An embodiment of this application provides a system architecture 200 in a training process of a neural network. A data collection device 260 is configured to collect data and store the data in a database 230. A training apparatus 220 generates a target model/rule 201 based on text data maintained in the database 230. For example, when the target model/rule is configured to implement natural language processing (natural language processing, NLP) training, data related to the system may be text data. The following uses an NLP training process as an example to describe in more detail how the training apparatus 220 obtains the target model/rule 201 based on the text data.

Work at each layer of a deep neural network may be described by using a mathematical expression *̅y̅*̅=*a*(*W*□*̅x̅*̅+*b*) From a physical layer, work at each layer of the deep neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operation 1, the operation 2, and the operation 3 are performed by *W*□*x*, the operation 4 is performed by +*b*, and the operation 5 is performed by *a*(). The word "space" is used herein for expression because a classified object is not a single thing, but a type of things. Space is a collection of all individuals of such type of things. W is a weight vector, and each value in the vector indicates a weight value of one neuron in the neural network at this layer. The vector *W* determines space transformation from the input space to the output space described above. In other words, a weight *W* at each layer controls how to transform space. A purpose of training the deep neural network is to finally obtain a weight matrix (a weight matrix formed by vectors *W* at a plurality of layers) at all layers of a trained neural network. Therefore, the training process of the neural network is essentially a manner of learning control of space transformation, and more specifically, learning a weight matrix.

Because it is expected that an output of the deep neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the deep neural network). For example, if the predicted value of the network is large, the weight vector is adjusted to lower the predicted value until the neural network can predict the target value that is actually expected. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

The target model/rule obtained by the training apparatus 220 may be applied to different systems or devices. In FIG. 8, an I/O interface 212 is configured for an execution device 210, to exchange data with an external device. A "user" may input data to the I/O interface 212 by using a client device 240.

The execution device 210 may invoke data, code, and the like in a data storage system 250, and may further store, in the data storage system 250, data, an instruction, and the like.

A calculation module 211 processes input data by using the target model/rule 201, to obtain gradient information; and further optimizes the gradient information by using an association function module 213, to obtain a processing result. The association function module 213 may specifically include an optimizer, that is, optimizing the gradient information by usingan optimization algorithm preset in the optimizer.

Finally, the I/O interface 212 returns the processing result to the client device 240, and provides the processing result to the user.

More deeply, the training apparatus 220 may generate, for different targets, corresponding target models/rules 201 based on different data, to provide a better result for the user.

In a case shown in FIG. 8, the user may manually specify data to be input to the execution device 210, for example, may operate on an interface provided by the I/O interface 212. In another case, the client device 240 may automatically input data to the I/O interface 212 and obtain a result. If the client device 240 needs to obtain permission of the user for automatically inputting the data, the user may set corresponding permission on the client device 240. The user may check, on the client device 240, a result output by the execution device 210. Specifically, the result may be presented in a form of display, sound, an action, or the like. The client device 240 may also serve as a data collection end to store the collected text data in the database 230.

It should be noted that FIG. 8 is merely a schematic diagram of the system architecture according to an embodiment of this application. A location relationship between a device, a component, a module, and the like shown in the figure constitutes no limitation. For example, in FIG. 8, the data storage system 250 is an external memory relative to the execution device 210. In another case, the data storage system 250 may alternatively be disposed in the execution device 210.

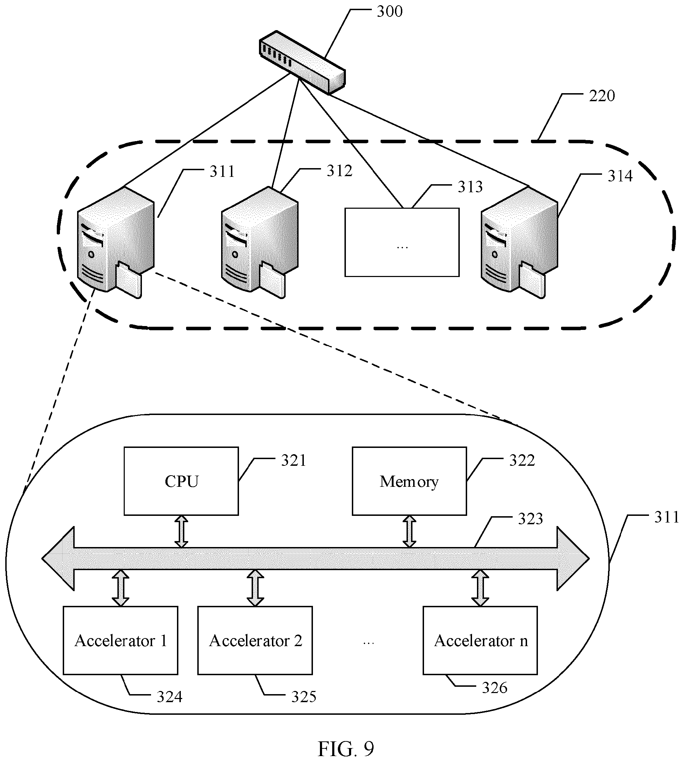

In the system architecture shown in FIG. 8, a single accelerator is usually used in the training apparatus 220, to implement a neural network model. The accelerator may be a GPU, a TPU, an NPU, another accelerator, or the like. In recent years, a large network and a large data amount are required in a neural network, which leads to a surge in computing requirements. Consequently, a single accelerator in a common training apparatus cannot meet the requirement of the training network. Therefore, a large quantity of parallel manners emerge, for example, data parallelism, model parallelism, hybrid parallelism, and pipeline parallelism. Data parallelism is most commonly used. The following describes, by using FIG. 9, a system architecture in which a training process of a neural network model is implemented through data parallelism.

As shown in FIG. 9, in the system architecture implemented through data parallelism, a plurality of accelerators may implement data parallelism by separately executing a model training process. The plurality of accelerators may be separately stored in a plurality of training apparatuses (311, 312, 313, and 314), namely, the training apparatus 220 in FIG. 8. Each training apparatus includes one or more accelerators, and data interconnection may be performed between different training apparatuses by using a switch 300. Alternatively, the plurality of accelerators may be stored in one training apparatus. The training apparatus 311 is used as an example herein. The training apparatus 311 includes a CPU 321, a memory 322, a bus 323, and n accelerators, the n accelerators include an accelerator 1 (324), an accelerator 2 (325), ..., and an accelerator n (326), and n is an integer greater than 1.

In a complete training iteration in which the training apparatus 311 trains the neural network model, the n accelerators separately read different input data from the memory 322 by using the bus 323. Optionally, the CPU 321 may pre-process the input data. NLP processing is used as an example. The input data may include text data, and the text data obtained at a time includes a plurality of sentences. After reading the text data, the CPU 321 performs data preprocessing. Because data parallelism needs to be performed, the CPU 321 controls input data sent to each accelerator to be different. Then, for a specific implementation process between the CPU 321 and the n accelerators in the training apparatus 311, refer to an interaction process between a CPU 100 and n accelerators (101, 102, 103, and 104) in FIG. 1.

Specifically, as shown in FIG. 1, the training process is implemented by the CPU 100 and a plurality of accelerators (an accelerator 1, an accelerator 2, ..., and an accelerator n), and the plurality of accelerators perform training together. The training process usually includes the following steps:
(1) Create a same training model on each accelerator. For example, if a BERT network is trained, each accelerator needs to have a complete BERT model.
(2) Initialize a weight coefficient on the accelerator 1, and send the weight coefficient to each accelerator by using a broadcast (broadcast) operation in collective communication (1001). Usually, when a neural network is trained, an initial value may be randomly assigned to a weight. A weight is first randomly initialized on any accelerator, and then the weight is sent to each accelerator, to keep initial weights of the accelerators consistent.
(3) The CPU sends different data to different accelerators.
(4) Each accelerator performs forward-backward computation, to obtain corresponding gradient information. Step (4) is performed inside each accelerator. After forward-backward computation, gradient information corresponding to a batch (batch) of data of the accelerator is obtained. Because input data is different in step (3), gradients obtained by accelerators are different.
(5) Perform an allreduce (allreduce) operation in collective communication, to obtain an average gradient. Different gradients obtained by the accelerators in step (4) are averaged. After step (5), gradients of all accelerators are consistent, and are values obtained after the gradients of all accelerators are averaged.
(6) Use the average gradient to update the initial weight. The initial weights of the accelerators are consistent after step (2), and are updated by using the average gradient obtained after the allreduce operation. Therefore, it can be ensured that weights of the accelerators may also be consistent after each update. In an update process in step (6), each accelerator may further use the average gradient and the weight obtained in step (1) as an input of an optimizer. The optimizer performs optimization by using an initial variable of the optimizer (1002), and outputs a processed gradient. Each accelerator further updates the weight by using the processed gradient.

The accelerator may be a graphics processing unit (graphics processing unit, GPU), a neural processing unit (neural processing unit, NPU), or a tensor processing unit (tensor processing unit, TPU). Gradient aggregation may be implemented by using a plurality of methods, for example, collective communication.

In the data parallel processing manner, training parameters such as the initial weight in step (2) and the initial variable in step (6) need to consume storage space, in the accelerator, used during training, for example, a video RAM used in GPU training, and memory used in CPU training. When a large neural network model is trained, training cannot be performed due to insufficient storage space in a single accelerator. The data parallel processing manner has the following disadvantages:
1. In step 1001, the weight coefficient of the neural network model occupies a large quantity of video RAMs. In the training apparatus of the neural network model, each of the n accelerators needs to store a weight coefficient. For a small- and medium-sized model, video RAM consumption is not too large. However, for a large model such as BERT or GPT-2, the weight coefficient occupies a large quantity of video RAMs, and when the weight coefficient is updated, each accelerator needs to perform a same updating operation.
2. In step 1002, an initial variable of the optimizer occupies a large quantity of video RAMs. In the training apparatus of the neural network model, n accelerators need to store n initial variables. During training, the initial variable is used in an iterative operation, and occupies a video RAM of each accelerator. In addition, each of the n accelerators has the initial variable, and values of the initial variables are equal.

A typical fully connected layer (matrix multiplication) is used as an example. A quantity of accelerators in the training apparatus is 4, an input layer in the table may be an output (feature map, feature map) of an upper layer, and a size and video RAM consumption of the layer are shown in Table 1.

**Table 1**

| | Input | Weight coefficient | Output [feature map] | Initial variable of an optimizer |
|---|---|---|---|---|
| Shape (matrix scale) | [256, 4096] | [4096, 2048] | [256, 2048] | 4*[4096, 2048] |
| Video RAM consumption (MB) | 4 | 32 | 2 | 128 |

It can be learned from the foregoing that, in the data parallel processing manner, the weight coefficient of the neural network model and the initial variable of the optimizer are repeatedly stored in each of the n accelerators. Consequently, the n accelerators in the training apparatus cause an unnecessary waste of video RAMs in a model training process, even if utilization of video RAM space of the n accelerators is low. When a large neural network model is trained, training cannot be performed due to insufficient video RAM space in the accelerator.

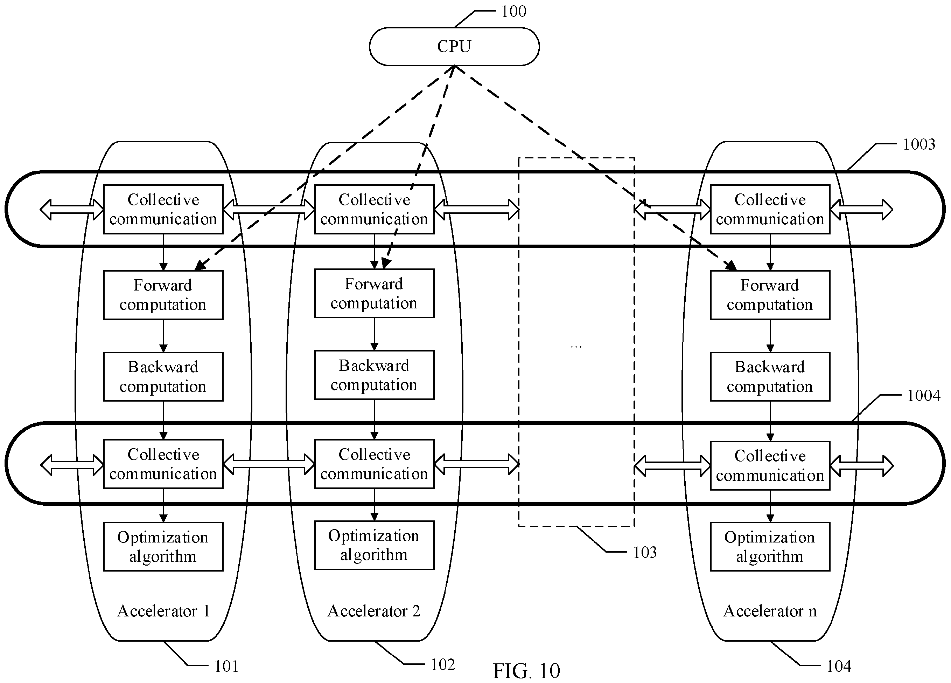

In the foregoing, both the weight coefficient of the neural network model and the initial variable of the optimizer occupy a large quantity of video RAMs. In embodiments of this application, it is considered that the two parameters are separately stored in a plurality of accelerators in a training apparatus in a distributed manner. For details, refer to FIG. 10. Compared with the implementation process in FIG. 1, embodiments of this application has two advantages: First, step 1001 is replaced with step 1003. A complete weight coefficient of a neural network model is stored in a distributed manner. In step 1003, the complete weight coefficient is obtained by the plurality of accelerators through collective communication. Second, step 1002 is replaced with step 1004. A complete initial variable of an optimizer is stored in a distributed manner. In step 1004, the complete initial variable is obtained by the plurality of accelerators through collective communication. The following describes a training method for a neural network model in embodiments of this application by using the two advantages.

### 1. A complete weight coefficient of a neural network model is stored in a distributed manner

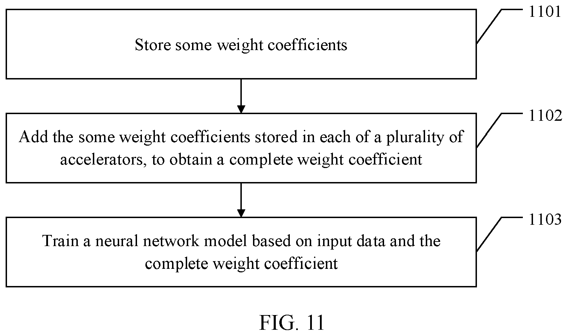

Refer to FIG. 11. An embodiment of a training method for a neural network model in embodiments of this application includes:
1101: Store some weight coefficients.

In this embodiment, a training apparatus includes a plurality of accelerators, and each accelerator stores the some weight coefficients in step 1101. The some weight coefficients stored in each of the plurality of accelerators in the training apparatus form a complete weight coefficient used for training a neural network model.

Specifically, in a training process of the neural network model, a weight coefficient of the neural network model needs to be initialized in a first training iteration. The initialization operation may be specified to be performed by a first accelerator, and the first accelerator is any one of the plurality of accelerators in the training apparatus. After the weight coefficient is initialized, the first accelerator may obtain the complete weight coefficient. Then, the first accelerator divides the complete weight coefficient, and sends the some weight coefficients to each of the plurality of accelerators in the training apparatus, to store the complete weight coefficient in a distributed manner. In other words, any one of the plurality of accelerators can initialize the weight coefficient, to reduce operation consumption of another accelerator in the training apparatus.

In a specific implementation, the first accelerator may further equally divide the complete weight coefficient, and then send the some weight coefficients to each of the plurality of accelerators in the training apparatus. Therefore, in step 1101, the some weight coefficients stored in each accelerator include weight coefficients assigned to the plurality of accelerators one by one after the complete weight coefficient is evenly divided. In the training process of the neural network model, processing capabilities of the plurality of accelerators in the training apparatus are usually the same or similar. Therefore, the complete weight coefficient may be evenly divided based on a quantity of the plurality of accelerators, and then assigned to the plurality of accelerators one by one, so that each accelerator stores, in a distributed manner, the some weight coefficients obtained through even division. In a subsequent model training process, each accelerator trains the model by using the evenly divided weight coefficient, to synchronize processing progresses of different accelerators in the training apparatus. In addition, the quantity of accelerators may specifically be 2, 4, 8, 16, 32, or the like. This is not limited herein.

1102: Aggregate the some weight coefficients stored in each of the plurality of accelerators, to obtain the complete weight coefficient.

In this embodiment, each accelerator in the training apparatus aggregates the some weight coefficients stored in each of the plurality of accelerators, to obtain the complete weight coefficient.

In a specific implementation, in step 1102, when aggregating the some weight coefficients stored in each of the plurality of accelerators, to obtain the complete weight coefficient, each accelerator in the training apparatus may specifically aggregate, by using an allgather (allgather) operation in collective communication, the some weight coefficients stored in each of the plurality of accelerators, to obtain the complete weight coefficient. For a specific communication process in which each accelerator performs the allgather operation, refer to descriptions in FIG. 6. Details are not described herein again. Each accelerator in the training apparatus may obtain the complete weight coefficient in the plurality of accelerators by using the allgather operation in collective communication. This implementation provides a specific implementation process of obtaining the complete weight coefficient. This can improve feasibility of the solution, and further improve flexibility of the solution. In addition, in step 1102, the plurality of accelerators may alternatively obtain the complete weight coefficient by interacting with a CPU or in another communication manner, in addition to collective communication. This is not limited herein.

1103: Train the neural network model based on input data and the complete weight coefficient.

In this embodiment, each accelerator in the training apparatus trains the neural network model based on the input data and the complete weight coefficient obtained in step 1102. Input data of the plurality of accelerators is different.

Specifically, in a data parallel system architecture including the plurality of accelerators in the training apparatus, a neural network training model may be pre-created in each accelerator. In one iterative training process, after the complete weight coefficient is obtained in step 1102, the complete weight coefficient and different input data are used as an input of the neural network model, to train the neural network model. For a specific training process, refer to the implementation process in FIG. 2 and FIG. 3. Then, an output of the neural network model is gradient information, and the gradient information may be used to update the weight coefficients (which may be the some weight coefficients in step 1101 or the complete weight coefficient obtained in step 1102) stored in each accelerator, to complete one iterative training process. The plurality of accelerators in the training apparatus may perform step 1101 to step 1103 for a plurality of times, to implement a plurality of iterations of the neural network model, and finally obtain a better solution.

In this embodiment, in a parallel processing process in which the training apparatus trains the neural network model by using the plurality of accelerators, the complete weight coefficient of the neural network model is stored in the plurality of accelerators in the training apparatus in a distributed manner, and weight coefficients of the plurality of accelerators are subsequently aggregated, to obtain the complete weight coefficient. The neural network model is further trained on each accelerator based on different input data and the complete weight coefficient. In other words, the complete weight coefficient is stored in the plurality of accelerators in the training apparatus in a distributed manner, to reduce video RAM consumption of the training apparatus in a training process of the neural network model.

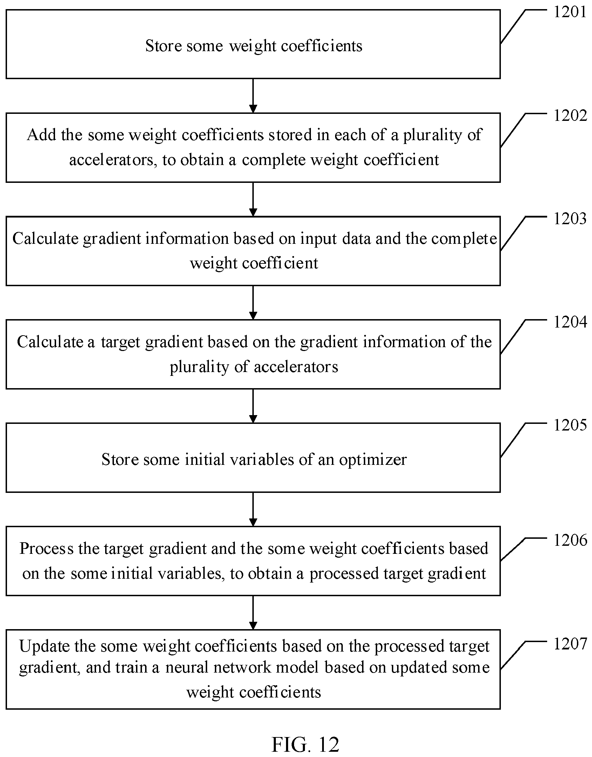

In the embodiment corresponding to FIG. 11, a part of video RAM consumption of the accelerator is specifically reduced by storing the complete weight coefficient of the neural network model in a distributed manner. On this basis, if an optimizer is used to optimize the gradient information, a complete initial variable of the optimizer may further be stored in a distributed manner, to further reduce video RAM consumption of the accelerator. Based on the embodiment in FIG. 11, the following describes, by using a specific embodiment in FIG. 12, a process that is further optimized and in which the neural network model is trained based on the input data and the complete weight coefficient in step 1103.

Refer to FIG. 12. Another embodiment of a training method for a neural network model in embodiments of this application includes:
1201: Store some weight coefficients.

In this embodiment, a training apparatus includes a plurality of accelerators, and each accelerator stores the some weight coefficients in step 1201. The some weight coefficients stored in each of the plurality of accelerators in the training apparatus form a complete weight coefficient used for training a neural network model.

1202: Aggregate the some weight coefficients stored in each of the plurality of accelerators, to obtain the complete weight coefficient.

In this embodiment, each accelerator in the training apparatus aggregates the some weight coefficients stored in each of the plurality of accelerators, to obtain the complete weight coefficient.

For an implementation process of step 1201 and step 1202 in this embodiment, refer to an implementation process of step 1101 and step 1102 in FIG. 11. Details are not described herein again.

1203: Calculate gradient information based on input data and the complete weight coefficient.

In this embodiment, each accelerator in the training apparatus calculates the gradient information based on the input data and the complete weight coefficient obtained in step 1202. Input data of the plurality of accelerators is different.

Specifically, in a data parallel system architecture including the plurality of accelerators in the training apparatus, a neural network training model may be pre-created in each accelerator. In one iterative training process, after the complete weight coefficient is obtained in step 1202, the complete weight coefficient and different input data are used as an input of the neural network model, to train the neural network model. For a specific training process, refer to the implementation process in FIG. 2 and FIG. 3. Then, an output of the neural network model is the gradient information.

1204: Calculate a target gradient based on the gradient information of the plurality of accelerators.

In this embodiment, each accelerator in the training apparatus calculates the target gradient based on the gradient information obtained through calculation in step 1203. The target gradient is used to update the some weight coefficients stored in each accelerator in step 1201, to complete an iteration process.

In a specific implementation, in step 1204, when calculating the target gradient based on the gradient information of the plurality of accelerators, each accelerator in the training apparatus may specifically calculate, by using a reduce-scatter (reduce-scatter) operation in collective communication, the target gradient based on the gradient information of the plurality of accelerators. For an implementation process of reduce-scatter, refer to the implementation process in FIG. 7. Details are not described herein again. Each accelerator in the training apparatus may obtain the target gradient in the plurality of accelerators by using the reduce-scatter operation in collective communication. This implementation provides a specific implementation process of calculating the target gradient. This can improve feasibility of the solution, and further improve flexibility of the solution. In addition, in step 1204, the plurality of accelerators may alternatively obtain the target gradient by interacting with a CPU or in another communication manner, in addition to collective communication. This is not limited herein.

1205: Store some initial variables of an optimizer.

In this embodiment, the training apparatus includes the plurality of accelerators, and each accelerator stores the some initial variables of the optimizer in step 1205. The some initial variables stored in each of the plurality of accelerators in the training apparatus form a complete initial variable of the optimizer.

In a specific implementation, in step 1205, the some initial variables stored in each of the plurality of accelerators in the training apparatus form the complete initial variable of the optimizer, and the optimizer is configured to update the weight coefficient of the neural network model. Specifically, in a training process of the neural network model, an initial variable of the optimizer needs to be initialized in a first training iteration. The initialization operation may be specified to be performed by a first accelerator, and the first accelerator is any one of the plurality of accelerators in the training apparatus. After the initial variable is initialized, the first accelerator may obtain the complete initial variable of the optimizer. Then, the first accelerator divides the complete initial variable of the optimizer, and sends the some initial variables to each of the plurality of accelerators in the training apparatus, to store the complete weight coefficient in a distributed manner. In other words, any one of the plurality of accelerators can initialize the initial variable of the optimizer, to reduce operation consumption of another accelerator in the training apparatus.

In addition, the first accelerator may further equally divide the complete initial variable of the optimizer, and then send the some initial variables to each of the plurality of accelerators in the training apparatus. Therefore, in step 1205, the some weight coefficients stored in each accelerator include initial variables assigned to the plurality of accelerators one by one after the complete initial variable is evenly divided. In the training process of the neural network model, processing capabilities of the plurality of accelerators in the training apparatus are usually the same or similar. Therefore, the complete initial variable may be evenly divided based on a quantity of the plurality of accelerators, and then assigned to the plurality of accelerators one by one, so that each accelerator stores, in a distributed manner, the some initial variables obtained through even division. In a subsequent model training process, each accelerator trains the model by using the evenly divided initial variable, to synchronize processing progresses of different accelerators in the training apparatus.

1206: Process the target gradient and the some weight coefficients based on the some initial variables, to obtain a processed target gradient.

In this embodiment, each accelerator in the training apparatus processes, based on the some initial variables stored in step 1205, the target gradient obtained through calculation in step 1204 and the some weight coefficients stored in step 1201, to obtain the processed target gradient.

Specifically, after the target gradient is obtained through calculation in step 1204, the target gradient may be adjusted for optimization. There are a plurality of adjustment policies, namely, optimizers (optimizer), for example, stochastic gradient descent. In other words, the obtained target gradient is simply multiplied by a preset learning rate, to adjust the weight coefficient stored in each accelerator. Currently, two optimizers are widely used: performing an element-wise (element-wise) operation on an initial variable, for example, an Adam optimizer, a momentum optimizer, an RMSProp optimizer, an AdaMax optimizer, an Adagrad optimizer, where when the initial variable is divided and sent to each accelerator, each accelerator can complete calculation without communication; and performing a vector (vector) operation (including a matrix operation or a vector operation) on an initial variable, where when calculating the initial variable, the optimizer, for example, a LARS optimizer, needs to insert an extra operation, to complete calculation.

For an optimizer such as the element-wise (element-wise) operation, operations of the optimizer are bitwise operations, and operations such as a matrix operation and accumulation are not required. When performing step 1206, each accelerator may directly perform an optimization operation on the locally obtained target gradient.

For an optimizer such as a vector operation, the optimizer needs to perform a vector operation such as a matrix operation or a vector operation, and needs a complete gradient during calculation. Because the target gradient is scattered on each accelerator, when performing step 1206, each accelerator needs to add extra collective communication, to ensure calculation correctness. The following describes in detail an implementation process of the optimizer.

Specifically, in step 1206, if the optimizer includes a vector operation, when processing the target gradient and the some weight coefficients based on the some initial variables, to obtain the processed target gradient, each accelerator in the training apparatus may specifically calculate a scalar representation of the target gradient; aggregate the scalar representation of the target gradient in each of the plurality of accelerators, to obtain a summation result of the target gradient; then calculate a vector representation of the target gradient based on the summation result; and further process the vector representation of the target gradient and the some weight coefficients based on the some initial variables, to obtain the processed target gradient. When the optimizer includes the vector operation (for example, a matrix operation or another vector operation), the complete gradient is required during calculation, and the target gradient is distributed in each accelerator. Therefore, when obtaining the processed target gradient, each accelerator first calculates the scalar representation of the target gradient; then aggregates the scalar representation of the target gradient in each of the plurality of accelerators, to obtain the summation result of the target gradient; calculates the vector representation of the target gradient based on the summation result; and further processes the vector representation of the target gradient and the some weight coefficients based on the some initial variables, to obtain the processed target gradient. In this implementation, the solution may be applied to an implementation process of an optimizer including a vector operation. This can improve feasibility of the solution.

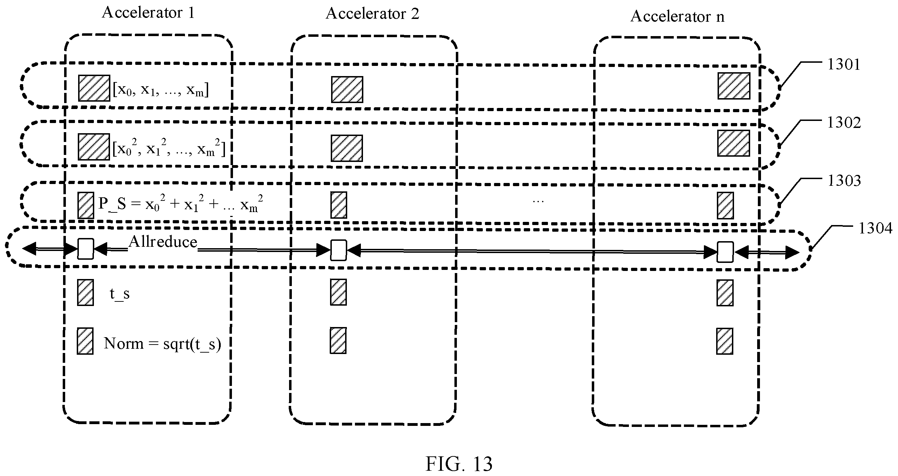

A data structure in the LARS optimizer shown in FIG. 13 is used as an example. When a norm parameter in the LARS optimizer is calculated, a target gradient obtained by each accelerator in step 1301 is {X₀, X₁, X₂, ..., Xₙ}, where Xᵢ is a one-dimensional or multi-dimensional tensor, and i is any integer from 1 to n. The process performed by each accelerator in step 1206 may be obtaining {X₀², X₁², X₂², ..., Xₙ²} by calculating a square of Xᵢ in step 1302 in FIG. 13. It is clear that a vector representation of Xᵢ may alternatively be obtained in another manner, for example, calculating a modulus of a vector or a root of a vector, other than calculating a square. This is not limited herein. Then, each accelerator calculates a quadratic sum in step 1303, to obtain P_S = X₀² + X₁² + X₂² + ... + Xₙ². Further, collective communication of each accelerator in step 1304 may specifically be processing the vector representation of the target gradient based on the parameter P_S and another first initial variable in the LARS optimizer, to obtain the processed target gradient.

In addition, in the foregoing operation, when aggregating the scalar representation of the target gradient in each of the plurality of accelerators, to obtain the summation result of the target gradient, each accelerator in the training apparatus may specifically aggregate the scalar representation of the target gradient in each of the plurality of accelerators by using an allreduce (allreduce) operation in collective communication, to obtain the summation result of the target gradient. For a specific implementation process in which each accelerator uses allreduce for communication, refer to an implementation process in FIG. 4. Details are not described herein again. Each accelerator in the training apparatus may obtain the summation result of the target gradient in the plurality of accelerators by using the allreduce (allreduce) operation in collective communication. This implementation provides a specific implementation process of obtaining the summation result of the target gradient. This can improve feasibility of the solution, and further improve flexibility of the solution. In addition, when performing addition to obtain the summation result of the target gradient, the plurality of accelerators may alternatively obtain the summation result of the target gradient by interacting with a CPU or in another communication manner, in addition to collective communication. This is not limited herein.

1207: Update the some weight coefficients based on the processed target gradient, and train the neural network model based on updated some weight coefficients.

In this embodiment, each accelerator in the training apparatus updates, based on the processed target gradient obtained in step 1206, the some weight coefficients stored in step 1201, and trains the neural network model based on the updated some weight coefficients.

Specifically, in step 1207, when updating the some weight coefficients based on the processed target gradient, each accelerator in the training apparatus may update, based on the processed target gradient obtained in step 1206, the some weight coefficients stored in step 1201. When the optimizer optimizes the weight coefficient of the neural network model, each accelerator may store the initial variable of the accelerator in a distributed manner, that is, each accelerator stores the some initial variables. Then, each accelerator uses the target gradient and the some weight coefficients as an input of the optimizer; performs optimization by using an optimization algorithm preset in the optimizer, to obtain the processed target gradient; and then updates, based on the processed target gradient, the some weight coefficients stored in each accelerator. In other words, the plurality of accelerators in the training apparatus store the complete initial variable of the optimizer in a distributed manner, to further reduce video RAM consumption of the training apparatus in a training process of the neural network model.

In addition, in a specific implementation, each accelerator in the training apparatus may further obtain an updating parameter of the some weight coefficients, and update the some weight coefficients based on the updating parameter of the some weight coefficients; obtain an updating parameter of the initial variable, and update the initial variable based on the updating parameter of the variable; obtain an updating parameter of the target gradient, and update the target gradient based on the updating parameter of the target gradient; and/or obtain an updating parameter of the processed target gradient, and update the target gradient based on the updating parameter of the processed target gradient. Target parameters related to the training process of the neural network model may be stored in a distributed manner, and the target parameters include the some weight coefficients, the initial variable, the target gradient, and/or the processed target gradient, and the like. When some weight coefficients corresponding to the neural network model or the initial variable of the optimizer needs to be updated, each accelerator in the training apparatus may update the target parameters stored in a distributed manner. It can be learned that training parameters such as the complete weight coefficient and the complete initial variable are stored in a distributed manner, and only the training parameters stored locally can be calculated in the step of optimizing and updating a neural network. Therefore, this can reduce repeated calculation in an existing data parallel solution, reduce an overall calculation amount, and further reduce video RAM consumption of the accelerator in the training apparatus.

Training a BERT network and a GPT-2 network is used as an example. A quantity of parameters of the BERT network is about 1.3G, and an Adam optimizer is used as a training network. If training is performed in the existing data parallel manner, only a weight parameter and space occupied by an initial variable of the optimizer are concerned, and a video RAM is about 7.8 GBytes. If the GPT-2 network is trained in the existing data parallel manner, a video RAM is 36 GBytes. Currently, a video RAM of most GPU cards in the market is 16 GBytes. In addition to a size of a feature map, the video RAM may be insufficient, and training cannot be performed. The video RAM of the GPT-2 network is far from sufficient. In the embodiments shown in FIG. 11 and FIG. 12, video RAM optimization effects of the BERT network and the GPT-2 network are compared with an implementation process of the conventional technical solution. A result is shown in Table 2. In a server with eight GPU cards (that is, the training apparatus includes eight accelerators), a great improvement can be achieved. Only a video RAM of 0.975 GBytes is consumed in a single server in the BERT network, and a video RAM of 4.5 GBytes is consumed in the GPT-2 network. This can greatly reduce video RAM consumption of the training apparatus in the training process of the neural network model. If a quantity of accelerators is further increased, for example, 32 GPU cards (that is, the training apparatus includes 32 accelerators), video RAM consumption of the training apparatus in the training process of the neural network model is further reduced.

**Table 2**

| **Element** | **BERT (Bytes)** | | | **GPT-2 (Bytes)** | | |
|---|---|---|---|---|---|---|
| | Conventional technical solution | Optimization solution (a single server with eight GPU cards) | Optimization solution (four servers with 32 GPU cards) | Conventional technical solution | Optimization solution (a single server with eight GPU cards) | Optimization solution (four servers with 32 GPU cards) |
| variable | 1.3G | 0.1625G | 0.04G | 6G | 0.75G | 0.1875G |
| avg_grad | 1.3G | 0.1625G | 0.04G | 6G | 0.75G | 0.1875G |
| m | 1.3G | 0.1625G | 0.04G | 6G | 0.75G | 0.1875G |
| v | 1.3G | 0.1625G | 0.04G | 6G | 0.75G | 0.1875G |
| m_hat | 1.3G | 0.1625G | 0.04G | 6G | 0.75G | 0.1875G |
| v_hat | 1.3G | 0.1625G | 0.04G | 6G | 0.75G | 0.1875G |
| **Total** | 7.8G | 0.975G | 0.24G | 36G | 4.5G | 1.125G |

In this embodiment, in a parallel process in which the training apparatus uses the plurality of accelerators to train the neural network model, the plurality of accelerators in the training apparatus store the complete weight coefficient of the neural network model in a distributed manner, and then perform addition to obtain the complete weight coefficient. Subsequently, when the optimizer optimizes the weight coefficient of the neural network model, each accelerator may store the initial variable of the accelerator in a distributed manner, that is, each accelerator stores the some initial variables. Then, each accelerator uses the target gradient and the some weight coefficients as an input of the optimizer; performs optimization by using an optimization algorithm preset in the optimizer, to obtain the processed target gradient; and then updates, based on the processed target gradient, the some weight coefficients stored in each accelerator. In other words, the plurality of accelerators in the training apparatus store the complete initial variable of the optimizer in a distributed manner, to further reduce video RAM consumption of the training apparatus in the training process of the neural network model.

### 2. A complete initial variable of an optimizer is stored in a distributed manner

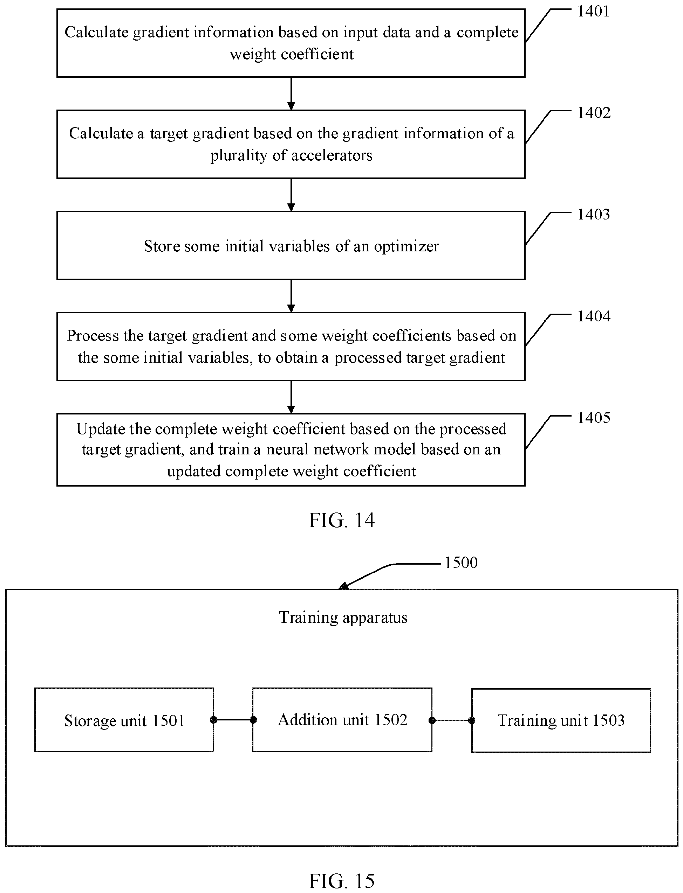

Refer to FIG. 14. Another embodiment of a training method for a neural network model in embodiments of this application includes:
1401: Calculate gradient information based on input data and a complete weight coefficient.

In this embodiment, a training apparatus includes a plurality of accelerators, and each accelerator calculates the gradient information based on the input data and the complete weight coefficient in step 1401. In a data parallel system architecture including the plurality of accelerators in the training apparatus, a neural network training model may be pre-created in each accelerator. Each accelerator may initialize the weight coefficient of the neural network model, to obtain the complete weight coefficient. In addition, in step 1401, input data of the plurality of accelerators is different.

1402: Calculate a target gradient based on the gradient information of the plurality of accelerators.

In this embodiment, each accelerator in the training apparatus calculates the target gradient based on the gradient information obtained through calculation in step 1401. The target gradient may be used to update the complete weight coefficient stored in each accelerator in step 1401, to complete an iteration process.

In a specific implementation, in step 1402, when calculating the target gradient based on the gradient information of the plurality of accelerators, each accelerator in the training apparatus may specifically calculate, by using a reduce-scatter (reduce-scatter) operation in collective communication, the target gradient based on the gradient information of the plurality of accelerators. For an implementation process of reduce-scatter, refer to the implementation process in FIG. 7. Details are not described herein again. Each accelerator in the training apparatus may obtain the target gradient in the plurality of accelerators by using the reduce-scatter operation in collective communication. This implementation provides a specific implementation process of calculating the target gradient. This can improve feasibility of the solution, and further improve flexibility of the solution. In addition, in step 1402, the plurality of accelerators may alternatively obtain the target gradient by interacting with a CPU or in another communication manner, in addition to collective communication. This is not limited herein.

1403: Store some initial variables of an optimizer.

In this embodiment, the training apparatus includes the plurality of accelerators, and each accelerator stores the some initial variables of the optimizer in step 1403. The some initial variables stored in each of the plurality of accelerators in the training apparatus form a complete initial variable of the optimizer. The optimizer is configured to update the weight coefficient of the neural network model.

In a specific implementation, in step 1403, the some initial variables stored in each of the plurality of accelerators in the training apparatus form the complete initial variable of the optimizer, and the optimizer is configured to update the weight coefficient of the neural network model. Specifically, in a training process of the neural network model, an initial variable of the optimizer needs to be initialized in a first training iteration. The initialization operation may be specified to be performed by a first accelerator, and the first accelerator is any one of the plurality of accelerators in the training apparatus. After the initial variable is initialized, the first accelerator may obtain the complete initial variable of the optimizer. Then, the first accelerator divides the complete initial variable of the optimizer, and sends the some initial variables to each of the plurality of accelerators in the training apparatus, to store the complete weight coefficient in a distributed manner. In other words, any one of the plurality of accelerators can initialize the initial variable of the optimizer, to reduce operation consumption of another accelerator in the training apparatus.

In addition, the first accelerator may further equally divide the complete initial variable of the optimizer, and then send the some initial variables to each of the plurality of accelerators in the training apparatus. Therefore, in step 1403, the some weight coefficients stored in each accelerator include initial variables assigned to the plurality of accelerators one by one after the complete initial variable is evenly divided. In the training process of the neural network model, processing capabilities of the plurality of accelerators in the training apparatus are usually the same or similar. Therefore, the complete initial variable may be evenly divided based on a quantity of the plurality of accelerators, and then assigned to the plurality of accelerators one by one, so that each accelerator stores, in a distributed manner, the some initial variables obtained through even division. In a subsequent model training process, each accelerator trains the model by using the evenly divided initial variable, to synchronize processing progresses of different accelerators in the training apparatus.

1404: Process the target gradient and the some weight coefficients based on the some initial variables, to obtain a processed target gradient.

In this embodiment, each accelerator in the training apparatus processes, based on the some initial variables stored in step 1403, the target gradient obtained through calculation in step 1402 and the some weight coefficients, to obtain the processed target gradient. The some weight coefficients processed by each of the plurality of accelerators form the complete weight coefficient in step 1401.

Specifically, after the target gradient is obtained through calculation in step 1204, the target gradient may be adjusted for optimization. There are a plurality of adjustment policies, namely, optimizers (optimizer), for example, stochastic gradient descent. In other words, the obtained target gradient is simply multiplied by a preset learning rate, to adjust the weight coefficient stored in each accelerator. Currently, two optimizers are widely used: performing an element-wise (element-wise) operation on an initial variable, for example, an Adam optimizer, a momentum optimizer, an RMSProp optimizer, an AdaMax optimizer, an Adagrad optimizer, where when the initial variable is divided and sent to each accelerator, each accelerator can complete calculation without communication; and performing a vector (vector) operation (including a matrix operation or a vector operation) on an initial variable, where when calculating the initial variable, the optimizer, for example, a LARS optimizer, needs to insert an extra operation, to complete calculation. For a specific implementation process of the two optimizers, refer to an implementation process of step 1206. Details are not described herein again.

1405: Update the complete weight coefficient based on the processed target gradient, and train the neural network model based on an updated complete weight coefficient.

In this embodiment, each accelerator in the training apparatus updates, based on the processed target gradient obtained in step 1404, the complete weight coefficient pre-stored in each accelerator in step 1401, to obtain the updated complete weight coefficient, and trains the neural network model based on the updated complete weight coefficient. It can be learned from step 1401 that a data amount of the gradient information of each accelerator corresponds to a data amount of the complete weight coefficient. It can be learned from step 1402 and step 1403 that a data amount of the target gradient corresponds to a data amount of the some weight coefficients. Therefore, in step 1404, each accelerator in the training apparatus updates a portion of the complete weight coefficient.

Specifically, in a data parallel system architecture including the plurality of accelerators in the training apparatus, a neural network training model may be pre-created in each accelerator. In one iterative training process, after the complete weight coefficient is obtained in step 1401, the complete weight coefficient and different input data are used as an input of the neural network model, to train the neural network model. For a specific training process, refer to the implementation process in FIG. 2 and FIG. 3. Then, an output of the neural network model is the gradient information, and the gradient information may be used to update the weight coefficients (which may be the some weight coefficients in step 1404 or the complete weight coefficient obtained in step 1401) stored in each accelerator, to complete one iterative training process. The plurality of accelerators in the training apparatus may perform step 1401 to step 1405 for a plurality of times, to implement a plurality of iterations of the neural network model, and finally obtain a better solution.

In addition, each accelerator in the training apparatus may further obtain an updating parameter of the complete weight coefficient, and update the complete weight coefficient based on the updating parameter of the complete weight coefficient; obtain an updating parameter of the initial variable, and update the initial variable based on the updating parameter of the initial variable; obtain an updating parameter of the target gradient, and update the target gradient based on the updating parameter of the target gradient; and/or obtain an updating parameter of the processed target gradient, and update the target gradient based on the updating parameter of the processed target gradient. Target parameters related to the training process of the neural network model may be stored in a distributed manner, and the target parameters include the complete weight coefficient, the initial variable, the target gradient, and/or the processed target gradient, and the like. When some weight coefficients corresponding to the neural network model or the initial variable of the optimizer needs to be updated, each accelerator in the training apparatus may update the target parameters stored in a distributed manner. This can further reduce video RAM consumption of the accelerator in the training apparatus.

In this embodiment, in a parallel processing process in which the training apparatus trains the neural network model by using the plurality of accelerators, the complete initial variable of the optimizer in the neural network model is stored in the plurality of accelerators in the training apparatus in a distributed manner. Each accelerator processes the target gradient and the some weight coefficients based on the some initial variables, to obtain the processed target gradient; then updates the complete weight coefficient based on the processed target gradient; and trains the neural network model based on the updated complete weight coefficient. In other words, the complete initial weight of the optimizer is stored in the plurality of accelerators in the training apparatus in a distributed manner, to reduce video RAM consumption of the training apparatus in a training process of the neural network model.

Based on the embodiments corresponding to FIG. 1 to FIG. 14, the following further provides a related device used to implement the solutions, to better implement the solutions in embodiments of this application.

Specifically, FIG. 15 is a schematic diagram of a structure of a training apparatus 1500 according to an embodiment of this application. The training apparatus 1500 includes a plurality of accelerators, and each accelerator specifically includes:
a storage unit 1501, configured to store some weight coefficients, where the some weight coefficients stored in each of the plurality of accelerators form a complete weight coefficient;
an addition unit 1502, configured to aggregate the some weight coefficients stored in each of the plurality of accelerators, to obtain the complete weight coefficient; and
a training unit 1503, configured to train a neural network model based on input data and the complete weight coefficient, where input data of the plurality of accelerators is different.

In a possible design, the training unit 1503 is specifically configured to:
calculate gradient information based on the input data and the complete weight coefficient;
calculate a target gradient based on the gradient information of the plurality of accelerators; and
update the some weight coefficients based on the target gradient, and train the neural network model based on updated some weight coefficients.

In a possible design, the storage unit 1501 is further configured to:
store some initial variables of an optimizer, where some initial variables stored in each of the plurality of accelerators form a complete initial variable of the optimizer, and the optimizer is configured to update the weight coefficient of the neural network model.

The training unit 1503 is specifically configured to:
process the target gradient and the some weight coefficients based on the some initial variables, to obtain a processed target gradient; and
update the some weight coefficients based on the processed target gradient.

In a possible design, the optimizer includes a vector operation, and the training unit 1503 is specifically configured to:
calculate a scalar representation of the target gradient;
aggregate the scalar representation of the target gradient in each of the plurality of accelerators, to obtain a summation result of the target gradient;
calculate a vector representation of the target gradient based on the summation result; and
process the vector representation of the target gradient and the some weight coefficients based on the some initial variables, to obtain the processed target gradient.

In a possible design, the training unit 1503 is specifically configured to:
aggregate the scalar representation of the target gradient in each of the plurality of accelerators by using an allreduce operation in collective communication, to obtain the summation result of the target gradient.

In a possible design, the some weight coefficients include weight coefficients assigned to the plurality of accelerators one by one after the complete weight coefficient is evenly divided.

In a possible design, the addition unit 1502 is specifically configured to:
aggregate, by using an allgather operation in collective communication, the some weight coefficients stored in each of the plurality of accelerators, to obtain the complete weight coefficient.

In a possible design, the training unit 1503 is specifically configured to:
calculate, by using a reduce-scatter operation in collective communication, the target gradient based on the gradient information of the plurality of accelerators.

In a possible design, the some initial variables include initial variables assigned to the plurality of accelerators one by one after the complete initial variable is evenly divided.

It should be noted that content such as information exchange or an execution process between the modules/units in the training apparatus 1500 is based on a same concept as the embodiments shown in FIG. 11 and FIG. 12 in this application. For specific content, refer to descriptions in embodiments in this application. Details are not described herein again.

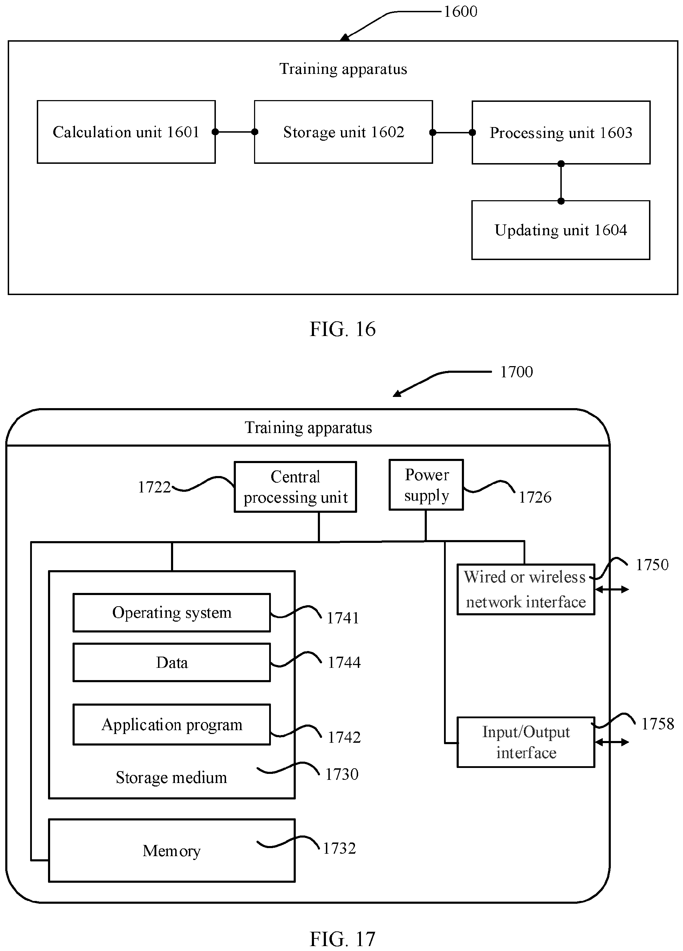

Specifically, FIG. 16 is another schematic diagram of a structure of a training apparatus 1600 according to an embodiment of this application. The training apparatus 1600 includes a plurality of accelerators, and each accelerator specifically includes:
a calculation unit 1601, configured to calculate gradient information based on input data and a complete weight coefficient, where input data of the plurality of accelerators is different, where
the calculation unit 1601 is further configured to calculate a target gradient based on the gradient information of the plurality of accelerators;
a storage unit 1602, configured to store some initial variables of an optimizer, where some initial variables stored in each of the plurality of accelerators form a complete initial variable of the optimizer, and the optimizer is configured to update the weight coefficient of a neural network model;
a processing unit 1603, configured to process the target gradient and some weight coefficients based on the some initial variables, to obtain a processed target gradient, where the some weight coefficients processed by each of the plurality of accelerators form the complete weight coefficient; and
an updating unit 1604, configured to update the complete weight coefficient based on the processed target gradient, and train the neural network model based on an updated complete weight coefficient.

In a possible design, the optimizer includes a vector operation, and the processing unit 1603 is specifically configured to:
calculate a scalar representation of the target gradient;
aggregate the scalar representation of the target gradient in each of the plurality of accelerators, to obtain a summation result of the target gradient;
calculate a vector representation of the target gradient based on the summation result; and
process the vector representation of the target gradient and the some weight coefficients based on the some initial variables, to obtain the processed target gradient.

In a possible design, the processing unit 1603 is specifically configured to:
aggregate the scalar representation of the target gradient in each of the plurality of accelerators by using an allreduce operation in collective communication, to obtain the summation result of the target gradient.

In a possible design, the calculation unit 1601 is specifically configured to:
calculate, by using a reduce-scatter operation in collective communication, the target gradient based on the gradient information of the plurality of accelerators.

In a possible design, the some initial variables include initial variables assigned to the plurality of accelerators one by one after the complete initial variable is evenly divided.

It should be noted that content such as information exchange or an execution process between the modules/units in the training apparatus 1600 is based on a same concept as the embodiment corresponding to FIG. 14 in this application. For specific content, refer to descriptions in embodiments in this application. Details are not described herein again.

An embodiment of this application further provides a training apparatus. FIG. 17 is a schematic diagram of a structure of a training apparatus according to an embodiment of this application. The training apparatus 1500 for a neural network described in the embodiment corresponding to FIG. 15 may be disposed on a training apparatus 1700, and is configured to implement functions of the training apparatus in the embodiments corresponding to FIG. 11 and FIG. 12. Alternatively, the training apparatus 1600 for a neural network described in the embodiment corresponding to FIG. 16 may be disposed on a training apparatus 1700, and is configured to implement functions of the training apparatus in the embodiment corresponding to FIG. 14. Specifically, the training apparatus 1700 is implemented by one or more training apparatuses. The training apparatus 1700 may vary greatly with configuration or performance, and may include one or more central processing units (central processing unit, CPU) 1722 (for example, one or more processors) and a memory 1732, one or more storage media 1730 (for example, one or more mass storage devices) that store an application program 1742 or data 1744. The memory 1732 and the storage medium 1730 may perform transitory storage or persistent storage. The program stored in the storage medium 1730 may include one or more modules (not shown in the figure), and each module may include a series of instruction operations for the training apparatus. Further, the central processing unit 1722 may be configured to communicate with the storage medium 1730, and perform the series of instruction operations in the storage medium 1730 on the training apparatus 1700. However, it should be understood that the training apparatus shown in FIG. 17 is merely an example of the training apparatus. The training apparatus 1700 may not include the memory 1732 and the storage medium 1730, but an external memory is configured outside the training apparatus 1700. In other words, the memory 1732, the storage medium 1730, and the central processing unit 1722 may be devices independent of each other. For example, an external memory is used in a vehicle-mounted training apparatus.

The training apparatus 1700 may further include one or more power supplies 1726, one or more wired or wireless network interfaces 1750, one or more input/output interfaces 1758, and/or one or more operating systems 1741, for example, Windows Server^{™}, Mac OS X^{™}, Unix^{™}, Linux^{™}, and FreeBSD^{™}.

In this embodiment of this application, the central processing unit 1722 is configured to perform the obtaining method for a neural network performed by the training apparatus in the embodiment corresponding to FIG. 3, or the obtaining method for a neural network performed by the training apparatus in the embodiment corresponding to FIG. 17. It should be noted that for a specific implementation in which the central processing unit 1722 performs the obtaining method for a neural network, refer to descriptions in the method embodiments corresponding to FIG. 3 and FIG. 17. Details are not described herein again.

An embodiment of this application further provides a computer program product. When the computer program product runs on a computer, the computer is enabled to perform steps performed by the training apparatus in the method described in the embodiments shown in FIG. 11 and FIG. 12, or steps performed by the training apparatus in the method described in the embodiments shown in FIG. 14.

An embodiment of this application further provides a computer-readable storage medium. The computer-readable storage medium stores a program used for signal processing. When the program is run on a computer, the computer is enabled to perform steps performed by the training apparatus in the method described in the embodiments shown in FIG. 11 and FIG. 12, or steps performed by the training apparatus in the method described in the embodiments shown in FIG. 14.

In addition, it should be noted that the apparatus embodiments described above are merely an example. The units described as separate parts may or may not be physically separate, and parts displayed as units may or may not be physical units, may be located in one position, or may be distributed on a plurality of network units. Some or all the modules may be selected based on an actual requirement to achieve objectives of the solutions of the embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or certainly may be implemented by dedicated hardware, including a dedicated integrated circuit, a dedicated CLU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, for this application, software program implementation is a better implementation in more cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the embodiments may be implemented by using software, hardware, firmware, or any combination thereof. When the software is used to implement the embodiments, all or some of the embodiments may be implemented in a form of a computer program product.

The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

## Claims

1. A training apparatus for a neural network model, wherein the training apparatus comprises a plurality of accelerators, and each accelerator is configured to:
store some weight coefficients, wherein the some weight coefficients stored in each of the plurality of accelerators form a complete weight coefficient;
aggregate the some weight coefficients stored in each of the plurality of accelerators, to obtain the complete weight coefficient; and
train a neural network model based on input data and the complete weight coefficient, wherein input data of the plurality of accelerators is different.

2. The training apparatus according to claim 1, wherein when training the neural network model based on the input data and the complete weight coefficient, each accelerator is specifically configured to:
calculate gradient information based on the input data and the complete weight coefficient;
calculate a target gradient based on the gradient information of the plurality of accelerators; and
update the some weight coefficients based on the target gradient, and train the neural network model based on updated some weight coefficients.

3. The training apparatus according to claim 2, wherein each accelerator is configured to:
store some initial variables of an optimizer, wherein some initial variables stored in each of the plurality of accelerators form a complete initial variable of the optimizer, and the optimizer is configured to update the weight coefficient of the neural network model; and
when updating the some weight coefficients based on the target gradient, each accelerator is specifically configured to:
process the target gradient and the some weight coefficients based on the some initial variables, to obtain a processed target gradient; and
update the some weight coefficients based on the processed target gradient.

4. The training apparatus according to claim 3, wherein the optimizer comprises a vector operation, and when processing the target gradient and the some weight coefficients based on the some initial variables, to obtain the processed target gradient, each accelerator is specifically configured to:
calculate a scalar representation of the target gradient;
aggregate the scalar representation of the target gradient in each of the plurality of accelerators, to obtain a summation result of the target gradient;
calculate a vector representation of the target gradient based on the summation result; and
process the vector representation of the target gradient and the some weight coefficients based on the some initial variables, to obtain the processed target gradient.

5. The training apparatus according to claim 4, wherein when aggregating the scalar representation of the target gradient in each of the plurality of accelerators, to obtain the summation result of the target gradient, each accelerator is specifically configured to:
aggregate the scalar representation of the target gradient in each of the plurality of accelerators by using an allreduce operation in collective communication, to obtain the summation result of the target gradient.

6. The training apparatus according to any one of claims 1 to 5, wherein the some weight coefficients comprise weight coefficients assigned to the plurality of accelerators one by one after the complete weight coefficient is evenly divided.

7. The training apparatus according to any one of claims 1 to 5, wherein when aggregating the some weight coefficients stored in each of the plurality of accelerators, to obtain the complete weight coefficient, each accelerator is specifically configured to:
aggregate, by using an allgather operation in collective communication, the some weight coefficients stored in each of the plurality of accelerators, to obtain the complete weight coefficient.

8. The training apparatus according to any one of claims 2 to 5, wherein when calculating the target gradient based on the gradient information of the plurality of accelerators, each accelerator is specifically configured to:
calculate, by using a reduce-scatter operation in collective communication, the target gradient based on the gradient information of the plurality of accelerators.

9. The training apparatus according to claim 3 or 4, wherein the some initial variables comprise initial variables assigned to the plurality of accelerators one by one after the complete initial variable is evenly divided.

10. A training apparatus for a neural network model, wherein the training apparatus comprises a plurality of accelerators, and each accelerator is configured to:
calculate gradient information based on input data and a complete weight coefficient, wherein input data of the plurality of accelerators is different;
calculate a target gradient based on the gradient information of the plurality of accelerators;
store some initial variables of an optimizer, wherein some initial variables stored in each of the plurality of accelerators form a complete initial variable of the optimizer, and the optimizer is configured to update the weight coefficient of a neural network model;
process the target gradient and some weight coefficients based on the some initial variables, to obtain a processed target gradient, wherein the some weight coefficients processed by each of the plurality of accelerators form the complete weight coefficient; and
update the complete weight coefficient based on the processed target gradient, and train the neural network model based on an updated complete weight coefficient.

11. The training apparatus according to claim 10, wherein the optimizer comprises a vector operation, and when processing the target gradient and the some weight coefficients based on the some initial variables, to obtain the processed target gradient, each accelerator is specifically configured to:
calculate a scalar representation of the target gradient;
aggregate the scalar representation of the target gradient in each of the plurality of accelerators, to obtain a summation result of the target gradient;
calculate a vector representation of the target gradient based on the summation result; and
process the vector representation of the target gradient and the some weight coefficients based on the some initial variables, to obtain the processed target gradient.

12. The training apparatus according to claim 11, wherein when aggregating the scalar representation of the target gradient in each of the plurality of accelerators, to obtain the summation result of the target gradient, each accelerator is specifically configured to:
aggregate the scalar representation of the target gradient in each of the plurality of accelerators by using an allreduce operation in collective communication, to obtain the summation result of the target gradient.

13. The training apparatus according to any one of claims 10 to 12, wherein when calculating the target gradient based on the gradient information of the plurality of accelerators, each accelerator is specifically configured to:
calculate, by using a reduce-scatter operation in collective communication, the target gradient based on the gradient information of the plurality of accelerators.

14. The training apparatus according to any one of claims 10 to 12, wherein the some initial variables comprise initial variables assigned to the plurality of accelerators one by one after the complete initial variable is evenly divided.

15. A training method for a neural network model, wherein the training method is applied to a plurality of accelerators, the plurality of accelerators are comprised in a training apparatus, and the method comprises:
storing some weight coefficients, wherein the some weight coefficients stored in each of the plurality of accelerators form a complete weight coefficient;
aggregating the some weight coefficients stored in each of the plurality of accelerators, to obtain the complete weight coefficient; and
training a neural network model based on input data and the complete weight coefficient, wherein input data of the plurality of accelerators is different.

16. The training method according to claim 15, wherein the training a neural network model based on input data and the complete weight coefficient comprises:
calculating gradient information based on the input data and the complete weight coefficient;
calculating a target gradient based on the gradient information of the plurality of accelerators; and
updating the some weight coefficients based on the target gradient, and training the neural network model based on updated some weight coefficients.

17. The training method according to claim 16, wherein the method further comprises:
storing some initial variables of an optimizer, wherein some initial variables stored in each of the plurality of accelerators form a complete initial variable of the optimizer, and the optimizer is configured to update the weight coefficient of the neural network model; and
the updating the some weight coefficients based on the target gradient comprises:
processing the target gradient and the some weight coefficients based on the some initial variables, to obtain a processed target gradient; and
updating the some weight coefficients based on the processed target gradient.

18. The training method according to claim 17, wherein the optimizer comprises a vector operation, and the processing the target gradient and the some weight coefficients based on the some initial variables, to obtain a processed target gradient comprises:
calculating a scalar representation of the target gradient;
aggregating the scalar representation of the target gradient in each of the plurality of accelerators, to obtain a summation result of the target gradient;
calculating a vector representation of the target gradient based on the summation result; and
processing the vector representation of the target gradient and the some weight coefficients based on the some initial variables, to obtain the processed target gradient.

19. The training method according to claim 18, wherein the aggregating the scalar representation of the target gradient in each of the plurality of accelerators, to obtain a summation result of the target gradient comprises:
aggregating the scalar representation of the target gradient in each of the plurality of accelerators by using an allreduce operation in collective communication, to obtain the summation result of the target gradient.

20. The training method according to any one of claims 15 to 19, wherein the some weight coefficients comprise weight coefficients assigned to the plurality of accelerators one by one after the complete weight coefficient is evenly divided.

21. The training method according to any one of claims 15 to 19, wherein the aggregating the some weight coefficients stored in each of the plurality of accelerators, to obtain the complete weight coefficient comprises:
aggregating, by using an allgather operation in collective communication, the some weight coefficients stored in each of the plurality of accelerators, to obtain the complete weight coefficient.

22. The training method according to any one of claims 16 to 19, wherein the calculating a target gradient based on the gradient information of the plurality of accelerators comprises:
calculating, by using a reduce-scatter operation in collective communication, the target gradient based on the gradient information of the plurality of accelerators.

23. The training method according to claim 17 or 18, wherein the some initial variables comprise initial variables assigned to the plurality of accelerators one by one after the complete initial variable is evenly divided.

24. A training method for a neural network model, wherein the training method is applied to a plurality of accelerators, the plurality of accelerators are comprised in a training apparatus, and the method comprises:
calculating gradient information based on input data and a complete weight coefficient, wherein input data of the plurality of accelerators is different;
calculating a target gradient based on the gradient information of the plurality of accelerators;
storing some initial variables of an optimizer, wherein some initial variables stored in each of the plurality of accelerators form a complete initial variable of the optimizer, and the optimizer is configured to update the weight coefficient of a neural network model;
processing the target gradient and some weight coefficients based on the some initial variables, to obtain a processed target gradient, wherein the some weight coefficients processed by each of the plurality of accelerators form the complete weight coefficient; and
updating the complete weight coefficient based on the processed target gradient, and training the neural network model based on an updated complete weight coefficient.

25. The training method according to claim 24, wherein the optimizer comprises a vector operation, and the processing the target gradient and some weight coefficients based on the some initial variables, to obtain a processed target gradient comprises:
calculating a scalar representation of the target gradient;
aggregating the scalar representation of the target gradient in each of the plurality of accelerators, to obtain a summation result of the target gradient;
calculating a vector representation of the target gradient based on the summation result; and
processing the vector representation of the target gradient and the some weight coefficients based on the some initial variables, to obtain the processed target gradient.

26. The training method according to claim 25, wherein the aggregating the scalar representation of the target gradient in each of the plurality of accelerators, to obtain a summation result of the target gradient comprises:
aggregating the scalar representation of the target gradient in each of the plurality of accelerators by using an allreduce operation in collective communication, to obtain the summation result of the target gradient.

27. The training method according to any one of claims 24 to 26, wherein the calculating a target gradient based on the gradient information of the plurality of accelerators comprises:
calculating, by using a reduce-scatter operation in collective communication, the target gradient based on the gradient information of the plurality of accelerators.

28. The training method according to any one of claims 24 to 26, wherein the some initial variables comprise initial variables assigned to the plurality of accelerators one by one after the complete initial variable is evenly divided.

29. A training apparatus for a neural network model, wherein the training apparatus comprises a plurality of accelerators, and each accelerator comprises:
a storage unit, configured to store some weight coefficients, wherein the some weight coefficients stored in each of the plurality of accelerators form a complete weight coefficient;
an addition unit, configured to aggregate the some weight coefficients stored in each of the plurality of accelerators, to obtain the complete weight coefficient; and
a training unit, configured to train a neural network model based on input data and the complete weight coefficient, wherein input data of the plurality of accelerators is different.

30. A training apparatus for a neural network model, wherein the training apparatus comprises a plurality of accelerators, and each accelerator comprises:
a calculation unit, configured to calculate gradient information based on input data and a complete weight coefficient, wherein input data of the plurality of accelerators is different, wherein
the calculation unit is further configured to calculate a target gradient based on the gradient information of the plurality of accelerators;
a storage unit, configured to store some initial variables of an optimizer, wherein some initial variables stored in each of the plurality of accelerators form a complete initial variable of the optimizer, and the optimizer is configured to update the weight coefficient of a neural network model;
a processing unit, configured to process the target gradient and some weight coefficients based on the some initial variables, to obtain a processed target gradient, wherein the some weight coefficients processed by each of the plurality of accelerators form the complete weight coefficient; and
an updating unit, configured to update the complete weight coefficient based on the processed target gradient, and train the neural network model based on an updated complete weight coefficient.

31. A computer-readable storage medium, wherein the computer storage medium stores a computer program, the computer program comprises program instructions, and when executing the program instructions, a processor performs the method according to any one of claims 15 to 23 or the method according to any one of claims 24 to 28.

32. A chip, wherein the chip comprises a processor and a data interface, and the processor reads, through the data interface, instructions stored in a memory, to perform the method according to any one of claims 15 to 23 or the method according to any one of claims 24 to 28.
